# EUROPÄISCHE PATENTSCHRIFT

(11) **EP 3 602 722 B1**
(45) Veröffentlichungstag und Bekanntmachung des Hinweises auf die Patenterteilung: **06.05.2026**
(21) Anmeldenummer: 18713630.4
(22) Anmeldetag: 22.03.2018
(51) Int. Cl.: H02J 3/38, H02J 3/40, H02P 6/20, F03D 9/25

(54) **VERFAHREN ZUM STARTEN EINES ENERGIEERZEUGUNGSNETZES**
METHOD FOR STARTING AN ENERGY GENERATION NETWORK
PROCÉDÉ DE DÉMARRAGE D'UN RÉSEAU DE PRODUCTION D'ÉNERGIE

(30) Priorität: 23.03.2017 DE 102017106338
(43) Veröffentlichungstag der Anmeldung: 05.02.2020
(73) Patentinhaber: Wobben Properties GmbH, 26607 Aurich (DE)
(72) Erfinder: BROMBACH, Johannes, 13437 Berlin (DE); MACKENSEN, Ingo, 26607 Aurich (DE); BUSKER, Kai, 26629 Großefehn (DE)
(74) Vertreter: Eisenführ Speiser
(86) Internationale Anmeldenummer: PCT/EP2018/057371
(87) Internationale Veröffentlichungsnummer: WO 2018/172489

(56) Entgegenhaltungen:
- WO-A1-2011/055218
- WO-A1-2016/082070
- US-A1- 2015 028 593
- US-A1- 2015 035 366
- US-A1- 2015 380 942

## Beschreibung

Die vorliegende Erfindung betrifft ein Verfahren zum Starten eines Energieerzeugungsnetzes, insbesondere eines Windparks. Außerdem betrifft die vorliegende Erfindung eine Windenergieanlage, und sie betrifft einen Windpark mit wenigstens einer ersten und einer zweiten Windenergieanlage.

Elektrische Versorgungsnetze sind bekannt, und mit ihnen wird elektrische Energie zwischen Energieeinspeisern und Energieverbrauchern verteilt. Ein solches elektrisches Versorgungsnetz wird heutzutage mit einer Wechselspannung mit einer vorbestimmten Netzfrequenz betrieben, meist 50 Hz oder 60 Hz. Sowohl die Einspeiser als auch die Verbraucher haben sich auf diese Frequenz eingestellt.

Besonders ist es so, dass ein Teil, meist ein großer Teil, des elektrischen Versorgungsnetzes immer in Betrieb ist. Wird eine elektrische Erzeugungseinheit zum Einspeisen elektrischer Energie zu diesem elektrischen Versorgungsnetz zugeschaltet, so kann sich diese Erzeugungseinheit ebenfalls an dem elektrischen Versorgungsnetz orientieren. Besonders erhält eine solche elektrische Erzeugungseinheit regelmäßig zunächst Energie aus dem elektrischen Versorgungsnetz, um damit etwaige Startprozesse zu versorgen. Zusätzlich zu der Energiebereitstellung hierfür gibt das elektrische Versorgungsnetz dabei aber auch Orientierung und Führung besonders für die Netzfrequenz und die Höhe der elektrischen Spannung.

Einige Erzeugungseinheiten, wie beispielsweise Windparks mit mehreren Windenergieanlagen, verfügen selbst über ein internes elektrisches Netz, das auch als Energieerzeugungsnetz bezeichnet werden kann. Auch ein solches Energieerzeugungsnetz ist üblicherweise in Betrieb und weist die Netzfrequenz des elektrischen Versorgungsnetzes auf, mit der es synchronisiert ist. Außerdem speist das Energieerzeugungsnetz über einen Verknüpfungspunkt, besonders einen Netzanschlusspunkt, in das elektrische Versorgungsnetz ein oder bezieht dort Energie aus dem elektrischen Versorgungsnetz, und ist in seiner eigenen Spannungshöhe an diesem Verknüpfungspunkt an die Spannungshöhe des elektrischen Versorgungsnetzes angepasst. Diese beiden Spannungen sind dort also gleich oder stehen entsprechend einem Übertragungsverhältnis eines Transformators an diesem Verknüpfungspunkt in einem bestimmten Verhältnis zueinander.

Wird nun das Energieerzeugungsnetz, also insbesondere das Parknetz, gestartet, also beispielsweise bei der Erstinbetriebnahme oder nach einem Fall, bei dem es heruntergefahren werden musste, so kann das Energieerzeugungsnetz dafür Energie von dem elektrischen Versorgungsnetz erhalten und sich auf die durch das elektrische Versorgungsnetz vorgegebene Netzfrequenz und Netzspannung einstellen und sich daran orientieren.

Es wurde nun aber erkannt, dass Energieerzeugungsnetze, besonders Parknetze von Windparks, in elektrischen Versorgungsnetzen eine zunehmende Bedeutung spielen. Es kann somit vorkommen, dass das elektrische Versorgungsnetz einen solchen Startprozess eines Energieerzeugungsnetzes nicht ausreichend führen oder stützen kann. Besonders kann zu erwarten sein, dass das elektrische Versorgungsnetz selbst eine Stützung benötigt. Es wurde auch erkannt, dass ein Energieerzeugungsnetz, besonders ein Parknetz eines Windparks, daher gegebenenfalls auch in der Lage sein sollte, eigenständig zu starten oder sogar eine Stützung für das elektrische Versorgungsnetz zu schaffen, sodass sich das elektrische Versorgungsnetz gegebenenfalls mithilfe des Energieerzeugungsnetzes wieder starten kann oder zumindest aus einer Situation, in der die Netzspannung signifikant eingebrochen ist, wieder erholen kann.

Besonders bisher vorgesehene Kraftwerke, die speziell für einen Netzwiederaufbau oder sogar einen Schwarzstart eines elektrischen Versorgungsnetzes bereitgehalten wurden, können nun seltener vorhanden sein oder sollen eingespart werden, sodass ein elektrisches Versorgungsnetz zu seinem Start oder einer Regeneration ohne ein solches Spezialkraftwerk auskommen muss.

Das Deutsche Patent- und Markenamt hat in der Prioritätsanmeldung zu vorliegender Anmeldung folgenden Stand der Technik recherchiert: US 2017/0074244 A1, DE 10 2014 214 151 A1, DE 10 2013 102 603 A1, EP 1 665 494 B1 und US 2015/0159627 A1.

US 2015/0028593 A1 betrifft ein Verfahren zum Anfahren eines Windparks. US 2015/380942 A1 betrifft ein Verfahren zum Starten eines Parknetzes eines Windparks gemäß dem Oberbegriff des Anspruchs 1.

Der vorliegenden Erfindung liegt somit die Aufgabe zugrunde, zumindest eines der oben genannten Probleme zu adressieren. Insbesondere soll eine Lösung geschaffen werden, dass ein Energieerzeugungsnetz, insbesondere ein Parknetz eines Windparks, selbstständig und ohne Hilfe eines elektrischen Versorgungsnetzes starten kann und dann insbesondere sogar das elektrische Versorgungsnetz beim Starten, Wiederaufbauen oder Erholen aus einem Fall eines Spannungseinbruchs stützen oder unterstützen kann.

Zumindest soll zu bisher bekannten Verfahren eine alternative Lösung vorgeschlagen werden.

Erfindungsgemäß wird ein Verfahren zum Starten eines Energieerzeugungsnetzes gemäß Anspruch 1 vorgeschlagen. Das Energieerzeugungsnetz, das vorgeschlagen wird, ist als Parknetz eines Windparks ausgebildet und weist entsprechend mehrere Windenergieanlagen auf. Es kann aber auch ein anderes Energieerzeugungsnetz verwendet werden, das mehrere Erzeuger aufweist, die elektrisch über ein Netz miteinander verbunden sind. Es kommen grundsätzlich auch mehrere Windparks bzw. Parknetze in Betracht, die zusammen gesteuert werden und gegebenenfalls nicht nur über einen gemeinsamen Netzanschlusspunkt, sondern gegebenenfalls über mehrere Netzanschlusspunkte in das elektrische Versorgungsnetz einspeisen. Es kommt auch als Energieerzeugungsnetz ein Netz in Betracht, das wenigstens einen Windpark bzw. ein Parknetz aufweist. Jedenfalls ist das Energieerzeugungsnetz an wenigstens einem Netzanschlusspunkt an das elektrische Versorgungsnetz angebunden. Dabei tauscht das Energieerzeugungsnetz in einem Normalbetriebsmodus elektrische Leistung über den Netzanschlusspunkt mit dem elektrischen Versorgungsnetz aus. Meist wird hierbei das Energieerzeugungsnetz elektrische Leistung über den Netzanschlusspunkt in das elektrische Versorgungsnetz einspeisen. Es kommt aber auch in besonderen Situationen in Betracht, dass das Energieerzeugungsnetz besonders zu Stützzwecken elektrische Leistung aus dem elektrischen Versorgungsnetz entnimmt.

Das Verfahren zum Starten des Energieerzeugungsnetzes schlägt nun vor, dass ein Aufbaumodus ausgewählt wird, wenn das elektrische Versorgungsnetz einen Spannungsfall aufweist. In dem elektrischen Versorgungsnetz ist hierbei also die elektrische Spannung in dem elektrischen Versorgungsnetz, die als Netzspannung bezeichnet wird, signifikant abgefallen. Besonders betrifft ein solcher Spannungsfall auch ein Zusammenbrechen oder Schwarzfallen des elektrischen Versorgungsnetzes. Im Falle eines Spannungsfalls wird der Aufbaumodus ausgewählt bzw. es wird von dem Normalbetriebsmodus in den Aufbaumodus gewechselt. Es kommt aber auch in Betracht, dass der Aufbaumodus dann ausgewählt wird, wenn das Energieerzeugungsnetz von dem elektrischen Versorgungsnetz getrennt ist. Insbesondere kommt auch in Betracht, dass ein Spannungsfall im elektrischen Versorgungsnetz vorliegt und außerdem das Energieerzeugungsnetz von dem elektrischen Versorgungsnetz getrennt ist. Diese Netztrennung kann also auch im Spannungsfall des elektrischen Versorgungsnetzes vorliegen.

Zum Starten wird somit das Energieerzeugungsnetz zunächst in diesem Aufbaumodus betrieben. Dieser Betrieb des Energieerzeugungsnetzes in dem Aufbaumodus beinhaltet einige Merkmale. Dazu gehört zunächst, dass ein Spannungsprägemittel, es können auch mehrere Spannungsprägemittel sein, eine Energieerzeugungsnetzspannung bereitstellt. Das Spannungsprägemittel ist auch eine spannungsprägende Windenergieanlage, oder ein einen Wechselrichter aufweisender Schaltschrank. Das Spannungsprägemittel, die spannungsprägende Windenergieanlage oder der spannungsprägende Schaltschrank, arbeitet somit so, dass eine Spannung geprägt, also insbesondere gesteuert bzw. geregelt wird. Bei einem solchen Spannungsprägemittel wird entsprechend der Strom nicht geprägt. Jedenfalls tritt eine Stromvorgabe hinter einer Spannungsvorgabe zurück. Das Spannungsprägemittel stellt eine Energieerzeugungsnetzspannung bereit, also die Spannung, die in dem Energieerzeugungsnetz vorherrscht bzw. zumindest am Ausgang dieses Spannungsprägemittels oder an einem gewählten Referenzpunkt anliegt. Im Falle eines Windparks entspricht diese Windenerzeugungsnetzspannung einer Windparknetzspannung.

Weiterhin ist ein Erstversorgungsmittel vorgesehen, das als eine stromprägende Windenergieanlage oder als ein einen Wechselrichter aufweisender Schaltschrank ausgebildet ist, das sich zunächst mit der von dem Spannungsprägemittel bereitgestellten Energieerzeugungsnetzspannung synchronisiert. Dieses Erstversorgungsmittel orientiert sich also an der Energieerzeugungsnetzspannung, die im Wesentlichen durch Spannungsprägemittel bereitgestellt wurde. Besonders weist diese Energieerzeugungsnetzspannung eine Frequenz auf, auf die sich das Erstversorgungsmittel synchronisiert. Das Erstversorgungsmittel gibt dabei besonders einen Strom ab, dessen Frequenz mit der Frequenz der Energieerzeugungsnetzspannung synchronisiert ist.

Das Spannungsprägemittel und das Erstversorgungsmittel arbeiten nun so zusammen bzw. sind so aufeinander abgestimmt, dass sie, also das Spannungsprägemittel und das Erstversorgungsmittel, in Summe eine elektrische Leistung im Energieerzeugungsnetz bereitstellen, nämlich in Höhe eines Eigenbedarfs des Energieerzeugungsnetzes. Ein solcher Eigenbedarf betrifft besonders die Leistung, die zum Starten des Energieerzeugungsnetzes benötigt wird, also insbesondere solche Leistung, die im Fall eines Windparks zum Starten der Windenergieanlage des Windparks benötigt wird.

Das Energieerzeugungsnetz startet also durch Auswahl des Aufbaumodus, in dem wenigstens ein Spannungsprägemittel und ein Erstversorgungsmittel zusammen betrieben werden, die jede für sich eine spezielle Aufgabe haben. Das Spannungsprägemittel schafft zunächst eine Spannung, nämlich die Energieerzeugungsnetzspannung, und das Erstversorgungsmittel orientiert sich daran, passt sich daran an und stellt besonders einen Strom zum Versorgen des Energieerzeugungsnetzes bereit. Das Erstversorgungsmittel übernimmt insoweit die Erstversorgung. Das Spannungsprägemittel kann aber auch einen Anteil dazu liefern, kann also auch Leistung bereitstellen. Die Hauptaufgabe des Spannungsprägemittels ist es aber, die Energieerzeugungsnetzspannung zu prägen.

Gemäß der Erfindung wird vorgeschlagen, dass das wenigstens eine Spannungsprägemittel die Energieerzeugungsnetzspannung im Wesentlichen leistungslos bereitstellt. In diesem Fall wird besonders eine Aufteilung vorgesehen, dass das Erstversorgungsmittel die notwendige Leistung zum Starten des Energieerzeugungsnetzes liefert, während das eine oder die mehreren Spannungsprägemittel die Spannung prägen und dem Erstversorgungsmittel eine entsprechende Orientierung bzw. Führungsgröße geben.

Vorzugsweise arbeitet das wenigstens eine Spannungsprägemittel zum Bereitstellen der Energieerzeugungsnetzspannung somit spannungsprägend. Insbesondere arbeitet das Spannungsprägemittel so, dass es auf eine Ausgangsspannung regelt, nämlich die Energieerzeugungsnetzspannung, die es damit bereitstellt. Es geht dabei auch darum, eine Frequenz zu prägen, nämlich die Frequenz der Spannung. Das Spannungsprägemittel prägt eine Spannung mit einer vorbestimmten Frequenz und Phase ein.

Gemäß der Erfindung wird vorgeschlagen, dass das wenigstens eine Erstversorgungsmittel zum Bereitstellen einer elektrischen Leistung im Energieerzeugungsnetz stromprägend arbeitet. Das Erstversorgungsmittel stellt somit einen Strom bereit bzw. speist einen Strom in das Energieerzeugungsnetz ein und regelt diesen insbesondere aus und prägt ihn dadurch. Dadurch können das Spannungsprägemittel und das Erstversorgungsmittel gut zusammenarbeiten, weil jedes seine eigene spezielle Aufgabe hat.

Gemäß **der** Erfindung wird vorgeschlagen, dass dem wenigstens einen Spannungsprägemittel wenigstens eine erste Statik zugrunde liegt und dem wenigstens einen Erstversorgungsmittel wenigstens eine zweite Statik zugrunde liegt, wobei jede Statik jeweils einen Zusammenhang, besonders linearen Zusammenhang, zwischen einer elektrischen Spannung des Energieerzeugungsnetzes und einer einzuspeisenden oder eingespeisten Blindleistung oder zwischen einer Frequenz des Energieerzeugungsnetzes und einer einzuspeisenden oder eingespeisten Wirkleistung beschreibt und die erste Statik eine kleinere Steigung als die zweite Statik aufweist.

Das Spannungsprägemittel und das Erstversorgungsmittel sind somit jeweils durch die jeweilige Statik gekennzeichnet. Die jeweilige Statik kann dazu in dem Spannungsprägemittel bzw. dem Erstversorgungsmittel implementiert sein. Das Spannungsprägemittel und das Erstversorgungsmittel weisen die Statik, es können auch mehrere sein, somit auf.

Dazu wird vorgeschlagen, dass die erste Statik eine kleinere Steigung als die zweite Statik aufweist. Das wird für beide Varianten der Statiken vorgeschlagen. Besonders beschreibt jede Statik einen linearen Zusammenhang. Die Steigung betrifft somit den Verlauf der Blindleistung in Bezug auf die Spannung, ungeachtet dessen, ob die Blindleistung oder die Spannung eine Eingangsgröße im regelungstechnischen Sinn bildet. Gleiches gilt für den Zusammenhang zwischen Wirkleistung und Frequenz, bei dem die Steigung den Verlauf der Wirkleistung in Bezug auf die Frequenz betrifft, auch unabhängig davon, ob die Wirkleistung oder die Frequenz eine Eingangsgröße im regelungstechnischen Sinn bildet.

Durch die Steigungen der Statiken können jeweils Arbeitspunkte festgelegt werden. Die geringere Steigung jeweils für die Statik des Spannungsprägemittels führt dazu, dass im stationären Fall das Spannungsprägemittel bei gleicher Spannung gegenüber dem Erstversorgungsmittel weniger Blindleistung einspeist, bzw. dass das Spannungsprägemittel bei gleicher Frequenz gegenüber dem Erstversorgungsmittel weniger Wirkleistung einspeist.

Vorzugsweise wird vorgeschlagen, dass
- dem wenigstens einen Spannungsprägemittel eine erste Blindleistungsstatik zugrunde liegt, die einen Zusammenhang zwischen einer durch das Spannungsprägemittel im Energieerzeugungsnetz bereitzustellenden elektrischen Spannung und einer durch das Spannungsprägemittel eingespeisten Blindleistung beschreibt, und
- dem wenigstens einen Erstversorgungsmittel eine zweite Blindleistungsstatik zugrunde liegt, die einen Zusammenhang zwischen einer im Energieerzeugungsnetz erfassten elektrischen Spannung und einer durch das Erstversorgungsmittel einzuspeisenden Blindleistung beschreibt und
- die erste Blindleistungsstatik eine kleinere Steigung als die zweite Blindleistungsstatik aufweist, und/oder dass
- dem wenigstens einen Spannungsprägemittel eine erste Wirkleistungsstatik zu-grunde liegt, die einen Zusammenhang zwischen einer im Energieerzeugungsnetz durch das Spannungsprägemittel bereitzustellenden Frequenz und einer durch das Spannungsprägemittel eingespeisten Wirkleistung beschreibt und,
- dem wenigstens einen Erstversorgungsmittel eine zweite Wirkleistungsstatik zu-grunde liegt, die einen Zusammenhang zwischen einer im Energieerzeugungsnetz erfassten Frequenz und einer durch das Erstversorgungsmittel einzuspeisenden Wirkleistung beschreibt und
- die erste Wirkleistungsstatik eine kleinere Steigung als die zweite Wirkleistungsstatik aufweist.

Sowohl die Blindleistungsstatik als auch die Wirkleistungsstatik können jeweils eine vorstehend allgemein beschriebene Statik sein. Es kann auch vorgesehen sein, dass jeweils eine Blindleistungsstatik und eine Wirkleistungsstatik zugrunde gelegt und damit implementiert sind. Jede Statik betrifft jeweils ein Spannungsprägemittel, bzw. ein Erstversorgungsmittel. Wenn mehrere Spannungsprägemittel bzw. Erstversorgungsmittel vorhanden sind, hat jedes seine eigene Statik, bzw. Statiken, die jeweils für alle Spannungsprägemittel und/oder jeweils für alle Erstversorgungsmittel gleich sein können. Jedes Spannungsprägemittel bzw. Erstversorgungsmittel betrachtet die von sich selbst eingespeiste Blindleistung und/oder Wirkleistung. Dazu wird vorzugsweise sein Wirk- und/oder Blindstrom erfasst.

Gemäß einer Ausführungsform wird vorgeschlagen, dass
- das wenigstens eine Spannungsprägemittel die bereitzustellende elektrische Spannung jeweils in Abhängigkeit der eingespeisten Blindleistung gemäß der ersten Blindleistungskennlinie bereitstellt, und
- das wenigstens eine Erstversorgungsmittel die einzuspeisende Blindleistung jeweils in Abhängigkeit der erfassten elektrischen Spannung gemäß der zweiten Blindleistungsstatik einspeist und/oder
- das wenigstens eine Spannungsprägemittel die bereitzustellende Frequenz jeweils in Abhängigkeit der eingespeisten Wirkleistung gemäß der ersten Wirkleistungsstatik bereitstellt und,
- das wenigstens eine Erstversorgungsmittel die einzuspeisende Wirkleistung jeweils in Abhängigkeit der erfassten Frequenz gemäß der zweiten Wirkleistungsstatik einspeist.

Für die Spannungsprägemittel einerseits und die Erstversorgungsmittel andererseits, die nämlich stromprägend ausgebildet sind, haben die Statiken somit unterschiedliche Bedeutung, zumindest für die regelungstechnische Umsetzung.

Das Spannungsprägemittel stellt seine Ausgangsspannung in Abhängigkeit der erfassten Blindleistung ein, bzw. stellt seine Frequenz, nämlich die Frequenz seiner Ausgangsspannung, in Abhängigkeit der erfassten Wirkleistung ein. Blindleistung bzw. Wirkleistung sind hierbei die Eingangsgrößen.

Das Erstversorgungsmittel stellt seine Blindleistung in Abhängigkeit der Spannung und seine Wirkleistung in Abhängigkeit der Frequenz ein. Hier bilden somit die Spannung bzw. die Frequenz die Eingangsgrößen. Die Statiken mit ihren Steigungen beziehen sich aber in jedem Fall auf die Blindleistung bezogen auf die Spannung bzw. die Wirkleistung bezogen auf die Frequenz. Als Spannung wird besonders eine Spannungsabweichung zugrunde gelegt, nämlich eine Abweichung der elektrischen Spannung von einer als Referenzwert zugrundegelegten Spannung, bspw. einer Netznennspannung.

Eine solche Statik, die den Zusammenhang zwischen Spannung und Blindleistung oder zwischen Frequenz und Wirkleistung beschreibt, wird in der Fachwelt auch als Droop bezeichnet. Sie bezieht sich insbesondere auf eine Spannungsabweichung zwischen Soll- und Ist-Spannung, hier besonders bezogen auf das Energieerzeugungsnetz, und damit grundsätzlich auf die Energieerzeugungsnetzspannung. Insoweit kann diese Statik auch als P-Regler angesehen werden, wobei bei dem Erstversorgungsmittel eine Blindleistung oder zusätzliche Blindleistung, proportional zur Spannungsabweichung bereitgestellt bzw. in das Energieerzeugungsnetz eingespeist wird.

Ebenso kann diese Statik, die den Zusammenhang zwischen Frequenz und Wirkleistung beschreibt, ebenfalls als P-Regler angesehen werden, wobei das Erstversorgungsmittel eine Wirkleistung oder zusätzliche Wirkleistung proportional zur Frequenzabweichung bereitgestellt bzw. in das Energieerzeugungsnetz einspeist.

Beim Spannungsprägemittel ist es jeweils umgekehrt.

Wenn die Statik nicht nur linear ist, kann aber ein linearer Anteil vorhanden sein. Der kann auch als P-Anteil in einem Regler bezeichnet werden oder als solcher betrachtet werden, wenn weitere Anteile vorhanden sind. Der P-Anteil kann insoweit dann die Steigung beschreiben.

Vorzugsweise ist die Steigung bzw. Verstärkung der zweiten Statik, zweiten Blindleistungsstatik und/oder der zweiten Wirkleistungsstatik wenigstens doppelt so groß, insbesondere wenigstens dreimal so groß wie die Steigung bzw. Verstärkung der entsprechenden ersten Statik, Blindleistungsstatik bzw. Wirkleistungsstatik. Hierbei kommt es besonders darauf an, dass die erste Steigung signifikant größer als die zweite Steigung ist. Die Statiken sind damit so aufeinander abgestimmt, dass das wenigstens eine Erstversorgungsmittel gegenüber dem Spannungsprägemittel die Blind- und/oder Wirkleistungseinspeisung im Wesentlichen übernimmt. Das Spannungsprägemittel übernimmt hierbei die erste Spannungsbereitstellung, während das Erstversorgungsmittel die Erstversorgung für die Leistung und Blindleistung übernimmt.

Ein Spannungsprägemittel kann bspw. ein spannungsprägender Wechselrichter sein und das Erstversorgungsmittel ein stromprägender Wechselrichter. Diese sind meist jeweils in einem Schaltschrank untergebracht, so dass auch vereinfachend von einem spannungsprägenden Schaltschrank bzw. stromprägenden Schaltschrank gesprochen wird. Es kommen aber auch andere Einheiten in Betracht, wie bspw. eine analog arbeitende Einspeiseeinheit. Es kann auch in einer Einheit, z.B. in einer Windenergieanlage wenigstens ein Spannungsprägemittel und ein Erstversorgungsmittel zusammen untergebracht sei.

Veranschaulichend und nur beispielhaft wird ein Funktionsprinzip nachfolgend für einen spannungsprägenden Wechselrichter und einen stromprägenden Wechselrichter erläutert, ohne darauf beschränkt zu sein.

Grundsätzlich arbeitet ein spannungsprägender Wechselrichter so, dass er eine Ausgangsspannung nach Amplitude, Frequenz und Phase an seinem Ausgang bereitstellt. Über eine Rückführung wird der Augenblickswert der Ausgangsspannung zurückgeführt.

Es wird somit ein Spannungssignal zurückgeführt. Es kann bspw. ein Toleranzbandverfahren eingesetzt werden, bei dem ständig, also mit der verwendeten Tastrate, geprüft wird, ob das zurückgeführte Spannungssignal in einem Toleranzband liegt. Sobald das Spannungssignal an eine Grenze des Toleranzbandes stößt, schaltet der Wechselrichter, um das Signal in dem Toleranzband zu halten.

Das Toleranzband ist dabei eine Umsetzung eines Solwertes für die Ausgangsspannung des Wechselrichters. Der Sollwert wird als Sollsignal vorgegeben, nämlich auch nach Amplitude, Frequenz und Phase, und das Toleranzband liegt im Grunde mit einer oberen und einer unteren Bandgrenze eng um dieses Sollsignal.

Tritt nun ein Blindleistungssprung ein, bei dem sich die Blindleistung im Energieerzeugungsnetz sprunghaft oder zumindest schnell ändert, weil bspw. ein kapazitiv wirkendes Element zugeschaltet wurde, wie bspw. eine Übertragungsleitung, so ergibt sich auch für den spannungsprägenden Wechselrichter eine Änderung seines abgegebenen und damit eingespeisten Blindstroms. Das liegt daran, dass der spannungsprägende Wechselrichter, ähnlich wie eine Spannungsquelle, seine Ausgangspannung konstant zu halten versucht, so dass sich bei etwa gleicher Spannung ein veränderter Strom ergibt.

Das führt dann weiterhin dazu, dass gemäß einer für diesen spannungsprägenden Wechselrichter hinterlegten Blindleistungsstatik ein neuer Spannungssollwert eingestellt wird. Die Ausgangsspannung ändert sich dann entsprechend des neuen Spannungssollwertes.

Es kann sich eine Spannungsabweichung zwischen der Spannung des Energieerzeugungsnetzes und einem Sollwert, der hier Netzsollspannung genannt wird, ergeben. Diese Netzsollspannung und damit diese Spannungsabweichung bezieht sich nicht auf den Augenblickswert der Ausgangsspannung, sondern auf einen Effektivwert oder anderen charakteristischen Wert der Spannungsamplitude.

Der stromprägende Wechselrichter arbeitet zunächst ganz ähnlich wie der spannungsprägende Wechselrichter, nur dass statt Augenblickswerten einer Ausgangsspannung Augenblickswerte eines Ausgangsstroms zurückgeführt werden. Es wird also ein Ausgangsstromsignal zurückgeführt. Ändert sich die Blindleistung im Energieerzeugungsnetz, hat das zunächst keine starke sofortige Auswirkung auf den Ausgangsstrom, denn der Ausgangsstrom wird geregelt. Der stromprägende Wechselrichter arbeitet insoweit wie eine Stromquelle.

Die veränderte gesamte Blindleistung wirkt sich somit zunächst nur für den spannungsprägenden Wechselrichter aus.

Der stromprägende Wechselrichter erkennt aber die Spannungsabweichung, die in Folge des Blindleistungsstroms der spannungsprägende Wechselrichter verursacht hat. Für den stromprägenden Wechselrichter wird dann in Abhängigkeit dieser Spannungsabweichung und gemäß seiner Blindleistungsstatik ein Blindleistungssollwert ermittelt und davon abhängig ein Sollstromsignal für den Ausgangsstrom bestimmt, das der stromprägende Wechselrichter dann einspeist.

Damit ändert sich dann auch der Blindstrom des stromprägenden Wechselrichters und der stromprägende Wechselrichter übernimmt dadurch einen großen Teil des Blindstroms des spannungsprägenden Wechselrichters und das führt dort wieder zu einer Anpassung der Ausgangsspannung gemäß der Blindleistungsstatik. Die beiden Wechselrichter, es können auch mehr sein, stellen sich dann gemäß ihren Blindleistungsstatiken auf einen stabilen Arbeitspunkt ein, der dieselbe Spannungsabweichung hat. Wegen der unterschiedlichen Steigungen der Blindleistungsstatiken speist der stromprägende Wechselrichter dann mehr Blindstrom bzw. Blindleistung ein als der spannungsprägende.

Bei einem Blindleistungssprung reagiert der spannungsprägende Wechselrichter somit sofort und passt seine Spannung an, was zu einer Reaktion des stromprägenden Wechselrichters führt, der somit zunächst die Blindleistung einspeist. Die beiden, oder mehreren, Wechselrichter nehmen dann einen Arbeitspunkt ein, in dem der stromprägende Wechselrichter wegen der vorgeschlagenen Wahl der Blindleistungsstatik dann die Blindleistungseinspeisung im Wesentlichen, zumindest zu einem größeren Teil, übernimmt.

Auf die ähnliche Art und Weise arbeitet das System auch bei einem Wirkleistungssprung oder einer schnellen Wirkleistungsänderung. Es ändert sich insgesamt ein Wirkstrom, wobei sich aber zunächst nur der Strom des spannungsprägenden Wechselrichters ändert. Diese Änderung seines Wirkstroms wird vom spannungsprägenden Wechselrichter erfasst und führt gemäß seiner Wirkleistungsstatik zu einem neuen Sollwert für sein Spannungssignal, nämlich mit veränderter Frequenz.

Als nächstes wird von dem stromprägenden Wechselrichter diese Frequenzänderung erfasst und entsprechende Wirkleistungssollwerte werden für den stromprägenden Wechselrichter erzeugt. Wegen der größeren Steigung der Statik bzw. Verstärkung der Wirkleistungsstatik des stromprägenden Wechselrichters wird dieser bei gleicher Frequenz einen größeren Wirkleistungswert annehmen, als der spannungsprägende Wechselrichter. Beide Wechselrichter speisen dann entsprechende Wirkleistung ein, wobei der stromprägende Wechselrichter den größeren Teil einspeist.

Die beschriebenen Reaktionen auf einen Blindleistungssprung und einen Wirkleistungssprung können auch zusammen erfolgen.

Gemäß einer Ausführungsform wird vorgeschlagen, dass das Auswählen des Aufbaumodus, insbesondere ein Wechseln von dem Normalbetriebsmodus in den Aufbaumodus, dann erfolgt oder auch dann erfolgen kann, wenn zusätzlich das Energieerzeugungsnetz einen Spannungsfall aufweist. Demnach wird vorgeschlagen, nicht nur einen Spannungsfall im elektrischen Versorgungsnetz zu betrachten, sondern auch einen Spannungsfall im Energieerzeugungsnetz. Besonders dann, wenn die Spannungsfälle, also insbesondere Spannungseinbrüche, bereits in einem der beiden Netze signifikant sind, kann das Auswählen des Aufbaumodus bzw. das Wechseln dahin vorgeschlagen werden. Wenn der jeweilige Spannungsfall gering ist, kommt auch in Betracht, dass zusätzlich das Energieerzeugungsnetz einen Spannungsfall aufweisen muss, um den Aufbaumodus auszuwählen bzw. in diesen Aufbaumodus zu wechseln.

Gemäß einer Ausführungsform wird vorgeschlagen, dass das Betreiben des Energieerzeugungsnetzes in dem Aufbaumodus erst erfolgt, wenn das Energieerzeugungsnetz spannungslos ist. Dadurch kann erreicht werden, dass der Aufbaumodus von Anfang an beginnen kann, ohne dass eine vorhandene Spannung nach Frequenz und/oder Phase und/oder Amplitude zu beachten wäre. Dadurch kann erreicht werden, dass allein das wenigstens eine Spannungsprägemittel und das wenigstens eine erste Versorgungsmittel den Aufbaumodus führen.

Besonders wird dazu auch vorgeschlagen, dass das Energieerzeugungsnetz von dem elektrischen Versorgungsnetz getrennt wird, sodass das Energieerzeugungsnetz eigenständig und ungestört hochfahren kann.

Gemäß einer Ausgestaltung wird vorgeschlagen, dass das wenigstens eine Erstversorgungsmittel bzw. die weiteren Erstversorgungsmittel zum Bereitstellen der elektrischen Leistung im Energieerzeugungsnetz kaskadiert synchronisiert werden. Die Synchronisierung erfolgt also nach und nach, indem ein erstes Erstversorgungsmittel mit dem Spannungsprägemittel synchronisiert wird und dabei auch bereits elektrischen Strom bereitstellt bzw. in das Energieerzeugungsnetz einspeist. Mit diesem ersten Minimalsystem aus wenigstens einem Spannungsprägemittel und einem Erstversorgungsmittel synchronisiert sich dann, soweit vorhanden, das nächste Erstversorgungsmittel.

Gemäß einer weiteren Ausgestaltung wird vorgeschlagen, dass die von dem wenigstens einen Erstversorgungsmittel bereitgestellte elektrische Leistung im Energieerzeugungsnetz wenigstens einen Blindleistungsanteil aufweist, der genügend groß ist, um den Blindleistungsbedarf des Energieerzeugungsnetzes zu decken. Besonders durch elektrische Leitungen im Energieerzeugungsnetz, aber auch durch induktive Verbraucher, kann ein Leistungsbedarf im Energieerzeugungsnetz bestehen. Dieser wird im Aufbaumodus gemäß dieser Ausführungsform durch das wenigstens eine Erstversorgungsmittel gedeckt. Entsprechend ergibt sich auch eine Mindestanforderung an die Größe des wenigstens einen Erstversorgungsmittels. Das wenigstens eine Erstversorgungsmittel bzw. die mehreren, wenn mehrere verwendet werden, müssen entsprechend so viel Blindleistung bereitstellen können wie das Energieerzeugungsnetz benötigt.

Vorzugsweise ist das Verfahren dadurch gekennzeichnet, dass die von dem wenigstens einen Erstversorgungsmittel bereitgestellte elektrische Leistung im Energieerzeugungsnetz wenigstens einen Blindleistungsanteil und einen Wirkleistungsanteil aufweist. Dafür wird vorgeschlagen, dass der Blindleistungsanteil größer als der Wirkleistungsanteil ist, vorzugsweise wenigstens doppelt so groß, weiter bevorzugt besonders wenigstens fünfmal so groß ist. Es wird somit vorgeschlagen, dass der Blindleistungsanteil signifikant höhe als der Wirkleistungsanteil ist. Dabei wurde erkannt, dass in diesem Aufbaumodus zunächst das Decken eines Bedarfs an Blindleistung im Vordergrund steht und dass etwaige Verbraucher, die Wirkleistung benötigen, gegebenenfalls in dem Aufbaumodus zunächst nicht angesteuert werden. Jedenfalls am Anfang des Aufbaumodus kann die Blindleistung im Vordergrund stehen. Etwaige Verbraucher für Wirkleistung müssen dann gegebenenfalls zunächst abgeschaltet werden bzw. abgeschaltet bleiben. Dadurch kann erreicht werden, dass zunächst möglichst viele Erzeuger an das Netz angeschlossen werden, um das Netz aufzubauen.

Vorzugsweise wird die Energieerzeugungsnetzspannung auf die Versorgungsnetzspannung hochgefahren, um das Energieerzeugungsnetz mit dem elektrischen Versorgungsnetz zu synchronisieren. Die Versorgungsnetzspannung ist dabei die Spannung, die das elektrische Versorgungsnetz aufweist. Besonders kann das Energieerzeugungsnetz wieder auf das elektrische Versorgungsnetz geschaltet werden, um den Normalbetriebsmodus wiederherzustellen, nachdem das Energieerzeugungsnetz mit dem elektrischen Versorgungsnetz synchronisiert ist.

Gemäß einer Ausgestaltungsform wird damit vorgeschlagen, dass das Energieerzeugungsnetz auf das elektrische Versorgungsnetz über einen Energieerzeugungsnetztransformator zugeschaltet wird, wenn das Energieerzeugungsnetz eine mit dem elektrischen Versorgungsnetz synchronisierten Energieerzeugungsnetzspannung aufweist. Ein solcher Energieerzeugungsnetztransformator ist insbesondere ein Windparktransformator, wenn das Energieerzeugungsnetz ein Parknetz eines Windparks ist. Der Windparktransformator kann auch synonym als Parktransformator oder Parktrafo bezeichnet werden.

Alternativ kann das Zuschalten des Energieerzeugungsnetzes auf das elektrische Versorgungsnetz auch dann erfolgen, wenn das elektrische Versorgungsnetz keine Spannung aufweist. in diesem Fall kann eine Netzwiederaufbauspannung am Netzanschlusspunkt bereitgestellt werden. Das elektrische Versorgungsnetz kann also durch das Energieerzeugungsnetz in Betrieb genommen werden.

Gemäß einer Ausführungsform wird vorgeschlagen, dass das wenigstens eine Spannungsprägemittel und das wenigstens eine Erstversorgungsmittel heruntergefahren werden, sodass das Energieerzeugungsnetz spannungslos ist, wenn das elektrische Versorgungsnetz einen Spannungsfall aufweist. Wenn das elektrische Versorgungsnetz einen Spannungsfall aufweist, zuvor also normal gearbeitet hat und zuvor der Normalbetriebsmodus vorgelegen hat, kann zunächst das Energieerzeugungsnetz heruntergefahren werden, um das Energieerzeugungsnetz spannungslos zu bekommen. Vorzugsweise wird das Energieerzeugungsnetz erst dann gestartet, wenn auch eine Behebung des Spannungsfalls im elektrischen Versorgungsnetz zu erwarten ist bzw. eine Behebung eines Fehlers, der zu dem Spannungsfall geführt hat, zu erwarten ist.

Es wird auch gemäß einer Ausführungsform vorgeschlagen, dass das wenigstens eine Spannungsprägemittel eine Energieerzeugungsnetzspannung erst dann bereitstellt, wenn das Energieerzeugungsnetz spannungslos ist. Das Energieerzeugungsnetz wird also zunächst heruntergefahren, oder es wird festgestellt, dass es heruntergefahren ist, und erst dann beginnt der erste Schritt des Aufbaumodus, nämlich eine Energieerzeugungsnetzspannung durch das Spannungsprägemittel bereitzustellen.

Es werden verschiedene Definitionen für den Spannungsfall vorgeschlagen, die sich auf die Nennspannung des elektrischen Versorgungsnetzes bezieht. Bezogen auf die Nennspannung des elektrischen Versorgungsnetzes wird dafür vorgeschlagen, dass die Spannung des elektrischen Versorgungsnetzes kleiner ist als 90 %, kleiner als 70 %, kleiner als 30 % oder kleiner als 10 % der Nennspannung. Mit einem Wert von weniger als 90 % liegt bereits ein signifikanter Spannungsfall vor. Besonders, um den Spannungsfall noch deutlicher als Fehler zu erkennen, kann ein Wert von unter 70 % der Nennspannung vorgeschlagen werden. Noch deutlicher und besser erkennbar ist ein Wert von weniger als 30 % der Nennspannung, und es wird deutlich, dass hier ein Fehler vorliegt, der auch einen Aufbau des Energieerzeugungsnetzes notwendig macht. Noch deutlicher wird die Verwendung von einem Wert weniger als 10 % zum Definieren dieses Spannungsfalls. Da im Normalbetrieb die Spannung des elektrischen Versorgungsnetzes etwa Nennspannung aufweist, wird sie sich bei einem Spannungsfall auch über die Werte von 90 %, 70 % und 30 % auf 10 % absenken, falls sie sich vorher nicht wieder erholt. Durch das Definieren dieser unterschiedlichen Werte können damit auch zumindest geringe Zeitunterschiede in der Erkennung resultieren, wenn sich die Spannung nicht wieder erholt. Vorzugsweise umfasst oder ist ein Spannungsfall ein Abfallen der Spannung auf den Wert null.

Gemäß einer Ausführungsform wird vorgeschlagen, dass das wenigstens eine Spannungsprägemittel zum Bereitstellen der Energieerzeugungsnetzspannung einen aus einer Kapazität gespeisten Gleichspannungszwischenkreis aufweist. Dazu wird vorgeschlagen, dass die Kapazität dazu eingerichtet ist, den Gleichspannungszwischenkreis im Falle eines Spannungsfalls im elektrischen Versorgungsnetz oder im Falle eines spannungslosen Energieerzeugungsnetzes so mit einer Gleichspannung zu versorgen, dass das wenigstens eine Spannungsprägemittel eine stabile Energieerzeugungsnetzspannung bereitstellen kann. Die Kapazität bzw. eine entsprechende Kondensatoreinheit oder Kondensatorbank stellt somit eine ausreichend hohe Gleichspannung zur Verfügung. Daraus kann besonders mit einem Wechselrichter eine Spannung im Energieerzeugungsnetz erzeugt und bereitgestellt werden.

Der Wechselrichter kann dafür beispielsweise über ein sogenanntes Pulsweitenmodulationsverfahren angesteuert werden. Es kommt auch in Betracht, ein Toleranzbandverfahren zu verwenden. Bei Verwendung des Toleranzbandverfahrens wird besonders vorgeschlagen, dass eine Spannung am Ausgang einer mit dem Wechselrichter verschalteten Ausgangsdrossel als Istspannung für das Toleranzbandverfahren zurückgeführt wird. Jedenfalls kann durch ein solches oder ähnliches Verfahren die notwendige Spannung im Energieerzeugungsnetz stabil bereitgestellt werden. Die Kapazität bzw. das Kondensatormittel oder die Kondensatorbank können insbesondere durch einen Gleichrichter gespeist werden, der an einen Generator, beispielsweise einer Windenergieanlage angeschlossen ist.

Gemäß einer Ausführungsform wird vorgeschlagen, dass ein Spannungsfall im elektrischen Versorgungsnetz erfasst wird und/oder eine Spannungslosigkeit im Energieerzeugungsnetz festgestellt wird, wobei dafür eine Spannungserfassung des wenigstens einen Spannungsprägemittels vorgeschlagen wird. Das Spannungsprägemittel kann damit selbstständig und unmittelbar den Spannungsfall bzw. die Spannungslosigkeit erkennen und in den Aufbaumodus schalten und einen ersten wichtigen Schritt zum Starten des Energieerzeugungsnetzes durchführen.

Gemäß einer Ausführungsform wird vorgeschlagen, dass das Energieerzeugungsnetz eine Leistungssteuerung umfasst, mittels derer das wenigstens eine Erstversorgungsmittel eine elektrische Leistung in Abhängigkeit eines Leistungssollwertes in das elektrische Versorgungsnetz einspeist. Mit einer solchen Leistungssteuerung des Energieerzeugungsnetzes, die beispielsweise als Parksteuerung oder zentrale Parksteuerung eines Windparks ausgebildet sein kann, kann somit die eingespeiste bzw. bereitgestellte Leistung koordiniert werden. Dazu kommt auch in Betracht, dass eine solche Leistungssteuerung von extern wie beispielsweise von einem Netzbetreiber des elektrischen Versorgungsnetzes einen Sollwert oder einen Zielwert erhält. Besonders im Fall eines Netzwiederaufbaus kann hierdurch eine Koordinierung mit einem Zuschalten oder Hochfahren elektrischer Verbraucher im elektrischen Versorgungsnetz vorgenommen werden. Eine solche Koordinierung könnte auch bereits innerhalb des Energieerzeugungsnetzes vorgenommen werden.

Vorzugsweise wird dabei ein Leistungssollwert von einem Energieerzeugungsnetzbetreiber oder von einem Netzbetreiber des elektrischen Versorgungsnetzes vorgegeben. Besonders der Netzbetreiber des elektrischen Versorgungsnetzes hat dadurch die Möglichkeit, durch einen solchen Sollwert steuernd auf das Energieerzeugungsnetz einzuwirken, ohne aber weitere Steuerungsdetails des Energieerzeugungsnetzes vorzunehmen.

Dazu wird dann die elektrische Leistung des Erstversorgungsmittels entsprechend erhöht, wird also bei einer Regelabweichung zwischen ihrem Istwert und dem vorgegebenen Sollwert, oder einem anderen Sollwert, langsam nachgeführt. Je nach Regler kann auch vorgesehen sein, dass eine gewisse bleibende Regelabweichung akzeptiert wird. Vorzugsweise wird aber ein I-Regler oder zumindest ein I-Anteil in einem Regler vorgeschlagen, um auch bleibende Regelabweichungen auszuregeln, also eine stationäre Genauigkeit zu erreichen. Besonders bei entsprechend hohen Leistungssollwerten, besonders dann, wenn zwischenzeitlich weitere Verbraucher zugeschaltet oder hochgefahren werden, können weitere Erstversorgungsmittel zugeschaltet und verwendet werden. Ihre Zuschaltung und Synchronisierung kann kaskadiert erfolgen. Damit kann nach und nach ein höherer Leistungsbedarf bedient werden.

Vorzugsweise wird auch vorgeschlagen, dass das Energieerzeugungsnetz eine Frequenzhaltung aufweist, die einen Teil der elektrischen Leistung des wenigstens einen Erstversorgungsmittels zurückhält, um diesen bei Bedarf zur Frequenzhaltung des elektrischen Versorgungsnetzes freizugeben, insbesondere einzuspeisen. Insbesondere kann diese Frequenzhaltung als Steuerungsvorschrift vorgesehen oder implementiert sein, besonders in einer zentralen Steuerungseinrichtung des Energieerzeugungsnetzes. Im Falle eines Windparks kann das somit in einer zentralen Parksteuerung oder zentralen Parksteuereinheit vorgesehen oder implementiert sein.

Das Erstversorgungsmittel kann dabei elektrische Leistung bereitstellen, die diejenige Leistung beschreibt, die das Erstversorgungsmittel in dem Moment verfügbar machen kann. Insoweit ist diese elektrische Leistung eine Obergrenze, zumindest eine temporäre Obergrenze. In dem Fall, dass das Erstversorgungsmittel eine Windenergieanlage ist, kann diese so viel elektrische Leistung bereitstellen, wie der vorherrschende Wind bereitstellt und etwaige andere Begrenzungen der Windenergieanlage noch zulassen. Sollte also beispielsweise Nennwind vorherrschen und sonst keine Beschränkung der Windenergieanlage vorliegen, so ist die elektrische Leistung des Erstversorgungsmittels in diesem Fall die Nennleistung der Windenergieanlage.

Es wird vorgeschlagen, davon einen Teil zurückzuhalten, also zunächst nicht einzuspeisen. Das kann beispielsweise bedeuten, dass für den Fall der beschriebenen Windenergieanlage diese ihren Betrieb drosseln wird, indem beispielsweise ihre Rotorblätter zum Teil aus dem Wind gedreht werden. Es kann aber auch bedeuten, dass beispielsweise bei Verwendung eines Energiespeichers in diesen der zurückgehaltene Teil der elektrischen Leistung eingespeichert wird, oder, wenn der elektrische Speicher die Leistungsquelle bildet, erst überhaupt nur ein Teil daraus verfügbarer Leistung verwendet wird. Im Falle der beispielhaft genannten Windenergieanlage kommt auch in Betracht, dass diese die vollständig aus dem Wind verfügbare Leistung, im Rahmen ihrer Begrenzungen, erzeugt, aber den zurückgehaltenen Teil vorübergehend verbraucht oder vernichtet, beispielsweise durch Widerstände, in denen die elektrische Leistung gezielt in Wärme umgesetzt wird. Das kann besonders durch einen Chopper-Vorgang bzw. eine Chopper-Schaltung oder Chopper-Vorrichtung erfolgen, wobei gezielt ein Teil der elektrischen Leistung durch Choppern, also durch Steuern eines Stromes durch eine gepulste Ansteuerung, in solche Widerstände zur Umwandlung in Wärme geführt wird.

Wird nun mehr Leistung zur Frequenzhaltung benötigt, kann auf diesen zurückgehaltenen Teil der verfügbaren Leistung zurückgegriffen werden. Es können also beispielsweise die Rotorblätter so verstellt werden, dass mehr Leistung aus dem Wind entnommen werden kann, um dieses erste Beispiel aufzugreifen. Oder es kann weniger Leistung verbraucht werden. Besonders kann der beschriebene Chopper-Vorgang so verändert werden, dass weniger Leistung dadurch verbraucht wird. Gegebenenfalls wird der Chopper-Vorgang vollständig ausgesetzt oder beendet, um diese Leistung zur Frequenzhaltung des Energieerzeugungsnetzes zu verwenden.

Vorzugsweise wird auch vorgeschlagen, dass die Frequenzhaltung elektrische Leistung aus dem elektrischen Versorgungsnetz entnimmt und vorzugsweise durch eine Chopper-Vorrichtung verbraucht. Damit kann nicht nur die eingespeiste Leistung verringert oder zurückgehalten werden, sondern noch stärker die Leistung zur Frequenzstützung reduziert werden, nämlich in einen negativen Bereich. Dadurch kann der Regelbereich erweitert werden.

Im Übrigen kann eine solche Frequenzhaltung zentral koordiniert werden oder auch von jedem Erstversorgungsmittel selbstständig ausgeführt werden. Besonders kann vorgesehen sein, dass jedes Erstversorgungsmittel eine solche Frequenzhaltung bzw. das beschriebene Detail basierend auf einem Leistungssollwert umsetzt oder basierend auf einer Frequenzmessung umsetzt. Besonders wird nämlich vorgeschlagen, dass der zurückgehaltene Teil der Leistung wieder verfügbar gemacht wird bzw. abhängig davon gesteuert wird, welchen Wert die Frequenz der elektrischen Spannung in dem Energieerzeugungsnetz bzw. im elektrischen Versorgungsnetz aufweist.

Außerdem oder alternativ wird vorgeschlagen, dass die Frequenzhaltung ein Einspeisen elektrischer Leistung des wenigstens einen Erstversorgungsmittels begrenzt, wenn das Energieerzeugungsnetz und/oder das elektrische Versorgungsnetz eine Netzfrequenz aufweist, die eine Überfrequenz darstellt. Eine solche Überfrequenz ist besonders eine Frequenz, die um einen vorbestimmten zulässigen Frequenzüberschreitungswert oberhalb einer Normalfrequenz, insbesondere Nennfrequenz, liegt. Dann wird vorgeschlagen, die eingespeiste Leistung zu reduzieren. Entsprechend wird eine Begrenzung der eingespeisten Leistung vorgeschlagen.

Gemäß einer Ausführungsform wird vorgeschlagen, dass das Energieerzeugungsnetz dazu eingerichtet ist, eine Wetterprognose zu empfangen und/oder eine Wetterprognose zu erstellen, wobei die Wetterprognose dazu verwendet wird, einen Zeitpunkt festzulegen, an dem das Betreiben des Energieerzeugungsnetzes in dem Aufbaumodus gestartet werden kann. Somit wird vorgeschlagen, dass basierend auf einer Wetterprognose, besonders wenn das Energieerzeugungsnetz ein Windpark ist oder Windenergieanlagen als Spannungsprägemittel und/oder Erstversorgungsmittel aufweist, das Starten des Energieerzeugungsnetzes, besonders das Betreiben in dem Aufbaumodus geplant wird.

Ist mit ausreichend Wind zu rechnen, so kann der vorgeschlagene Aufbaumodus gestartet und durchgeführt werden. Ist nicht ausreichend Wind vorhanden, so kann der Aufbaumodus gegebenenfalls nicht gestartet werden. Es kommt aber auch in Betracht, dass ausreichend Wind vorhanden ist, gleichwohl die Windgeschwindigkeit vergleichsweise niedrig ist, sodass mehrere Windenergieanlagen beispielsweise als Erstversorgungsmittel benötigt werden, um ausreichend Leistung bereitstellen zu können. Entsprechend kann vorgesehen sein, dass nach dem Starten des Spannungsprägemittels, das eine Energieerzeugungsnetzspannung bereitstellt, entsprechend viele Windenergieanlagen als Erstversorgungsmittel gestartet werden. Gegebenenfalls kommt auch in Betracht, dass entsprechend viele Spannungsprägemittel zunächst verwendet werden, um die Energieerzeugungsnetzspannung bereitzustellen.

Gemäß einer Ausführungsform wird vorgeschlagen, dass das Spannungsprägemittel und das Erstversorgungsmittel jeweils eine Einspeiseeinheit bilden und durch eine Ansteuerung als Spannungsprägemittel bzw. Erstversorgungsmittel arbeiten, wobei insbesondere das Spannungsprägemittel durch entsprechende Änderung der Ansteuerung als Erstversorgungsmittel und das Erstversorgungsmittel durch Änderung der Ansteuerung als Spannungsprägemittel arbeiten kann. Insbesondere können das Spannungsprägemittel und das Erstversorgungsmittel abgesehen von der Ansteuerung gleich sein. Insbesondere können in dem Energieerzeugungsnetz mehrere, insbesondere im Wesentlichen gleiche Einspeiseeinheiten vorgesehen sein, die nach Bedarf als Spannungsprägemittel oder als Erstversorgungsmittel arbeiten. Insbesondere wird vorgeschlagen, dass das Energieerzeugungsnetz ein Parknetz eines Windparks ist und die Einspeiseeinheiten Windenergieanlagen sind und jede Windenergieanlage je nach Ansteuerung als Spannungsprägemittel oder als Erstversorgungsmittel arbeiten kann. Es kann gemäß dieser oder jeder anderen Ausführungsform auch vorgesehen sein, dass eine Windenergieanlage ein Spannungsprägemittel und ein Erstversorgungsmittel umfassen. Bspw. kann ein Spannungsprägemittel und ein Erstversorgungsmittel jeweils als ein Leistungsschrank in der Windenergieanlage, oder auch woanders, vorgesehen sein. Vorzugsweise ist dafür ein Batteriespeichercontainer vorgesehen, der außerdem einen Batteriespeicher aufweist, zum Bereitstellen elektrischer Leistung für den Netzwiederaufbau.

Besonders kann sich die Realisierung als Spannungsprägemittel oder Erstversorgungsmittel darin unterscheiden, dass bei dem Spannungsprägemittel ein Spannungsistwert zurückgeführt und mit einem Spannungssollwert verglichen wird, um dadurch das Spannungsprägemittel auf den Spannungssollwert zu regeln, wohingegen das Erstversorgungsmittel besonders als stromprägendes Mittel arbeiten kann und ein Stromistwert zurückgeführt und mit einem Stromsollwert verglichen wird, um davon abhängig das Erstversorgungsmittel zu steuern. Insbesondere wird das Erstversorgungsmittel auf den Stromsollwert geregelt. Dies betrifft besonders jeweils die Augenblickswerte und weniger die Effektivwerte, die nur indirekt betroffen sind.

Besonders ist vorgesehen, dass alle Einspeiseeinheiten des Energieerzeugungsnetzes je nach Ansteuerung als Spannungsprägemittel oder Erstversorgungsmittel arbeiten können. Insbesondere wird für einen Windpark vorgeschlagen, dass alle Windenergieanlagen des Windparks je nach Ansteuerung als Spannungsprägemittel oder als Erstversorgungmittel arbeiten können.

Erfindungsgemäß wird auch eine Windenergieanlage vorgeschlagen, die eine Steuerungseinheit und einen Umrichter aufweist, der dazu eingerichtet ist, spannungsprägend und/oder stromprägend zu arbeiten. Die Steuerungseinheit steuert den Umrichter so an, dass die Windenergieanlage dazu eingerichtet ist, als Spannungsprägemittel oder als Erstversorgungsmittel zu arbeiten, insbesondere in einem Verfahren gemäß wenigstens einer vorstehend beschriebenen Ausführungsform zu arbeiten.

Die Windenergieanlage ist somit dazu vorbereitet, besonders durch entsprechende Implementierung einer Steuerung in ihrer Steuerungseinheit, die Steuerungs- und/oder Verfahrensschritte oder einen Teil davon auszuführen, die im Zusammenhang mit dem Spannungsprägemittel beschrieben wurden, wenn die Windenergieanlage als Spannungsprägemittel arbeitet, oder die für das Erstversorgungsmittel beschrieben wurden, wenn die Windenergieanlage als Erstversorgungsmittel arbeitet.

Erfindungsgemäß wird auch ein Windpark vorgeschlagen, der wenigstens eine erst und eine zweite Windenergieanlage aufweist, wobei die erste Windenergieanlage spannungsprägend und die zweite Windenergieanlage stromprägend arbeiten kann, insbesondere, um als Erstversorgungsmittel zu arbeiten. Und diese wenigstens eine erst und eine zweite Windenergieanlage sind dadurch dazu vorbereitet, ein Verfahren gemäß einer der vorstehend beschriebenen Ausführungsformen auszuführen. Alternativ ist wenigstens ein erster Wechselrichter vorgesehen, der spannungsprägend arbeiten kann, und es ist wenigstens ein zweiter Wechselrichter vorgesehen, der stromprägend arbeiten kann, um ein Verfahren gemäß einer der vorstehend beschriebenen Ausführungsformen auszuführen

Vorzugsweise wird als wenigstens eine erste und wenigstens eine zweite Windenergieanlage jeweils eine erfindungsgemäß Windenergieanlage verwendet werden oder eine Windenergieanlage gemäß einer Ausführungsform.

Gemäß einer Ausführungsform wird vorgeschlagen, dass wenigstens ein erster bzw. der wenigstens eine erste Wechselrichter, der spannungsprägend arbeiten kann, und wenigstens ein zweiter bzw. der wenigstens eine zweite Wechselrichter, der stromprägend arbeiten kann, zusammen mit einer Energiespeichereinheit, insbesondere einem Batteriespeicher, gekoppelt sind und zusammen eine Schwarzstarteinheit bilden und dazu vorbereitet sind, zum Betreiben des Energieerzeugungsnetzes in dem Aufbaumodus verwendet zu werden, insbesondere so, dass die Energiespeichereinheit dem wenigstens einen ersten und dem wenigstens einen zweiten Wechselrichter zum Betreiben des Aufbaumodus nötige Energie bereitstellt.

Der wenigstens eine erste Wechselrichter bildet dazu das Spannungsprägemittel und der wenigstens eine zweite Wechselrichter bildet dazu das Erstversorgungsmittel. Die Leistung, die die Wechselrichter jeweils zum Einspeisen bzw. bereitstellen benötigen, als auch die Leistung, die sie für ihre Eigenversorgung benötigen, besonders für eine Steuerung und ggf. für Kommunikationseinrichtungen, liefert die Energiespeichereinheit. Vorzugsweise wird diese Schwarzstarteinheit als Schwarzstartcontainer ausgeführt, so dass die Wechselrichter und die Energiespeichereinheit in einem Container untergebracht sind. Durch die Verwendung eines solchen Containers kann auf einfache Art und Weise ein Windpark, der bisher nicht schwarzstartfähig war, zu einem schwarzstartfähigen Windpark aufgerüstet werden. Der Schwarzstartcontainer braucht nur an das Parknetz des Windparks angeschlossen zu werden und ggf. wird noch eine Kommunikationseinrichtung bzw. Kommunikationsschnittstelle zur Kommunikation mit einer zentralen Parksteuerung bzw. zentralen Parksteuereinheit installiert.

Die Erfindung wird nun nachfolgend unter Bezugnahme auf die begleitenden Figuren beispielhaft näher erläutert.
- Fig. 1: zeigt eine Windenergieanlage schematisch in einer perspektivischen Darstellung.
- Fig. 2: zeigt einen Windpark in einer schematischen Darstellung.
- Fig. 3: zeigt einen herkömmlichen Ablauf für einen Schwarzstart und Netzwiederaufbau nach einem Netzzusammenbruch.
- Fig. 4: zeigt einen vorgeschlagenen Ablauf für einen Start und Wiederaufbau nach einem Netzzusammenbruch.
- Fig. 5: zeigt schematisch einen Windpark in einem Startzustand.
- Fig. 6: zeigt ein Diagramm mit unterschiedlichen Statiken.
- Fig. 7: zeigt schematisch einen Windpark und einige Details einer Steuerung der gezeigten Windenergieanlage.
- Fig. 8: verdeutlicht das Zusammenspiel eines Spannungsprägemittels mit einem Erstversorgungsmittel.

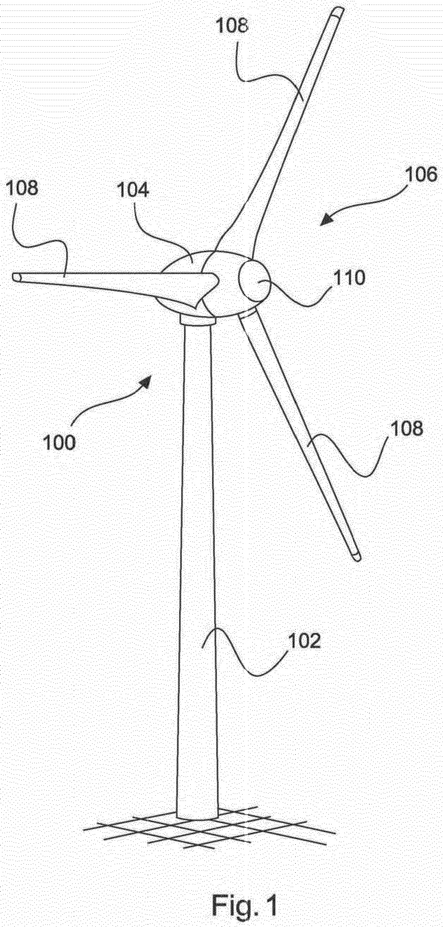

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

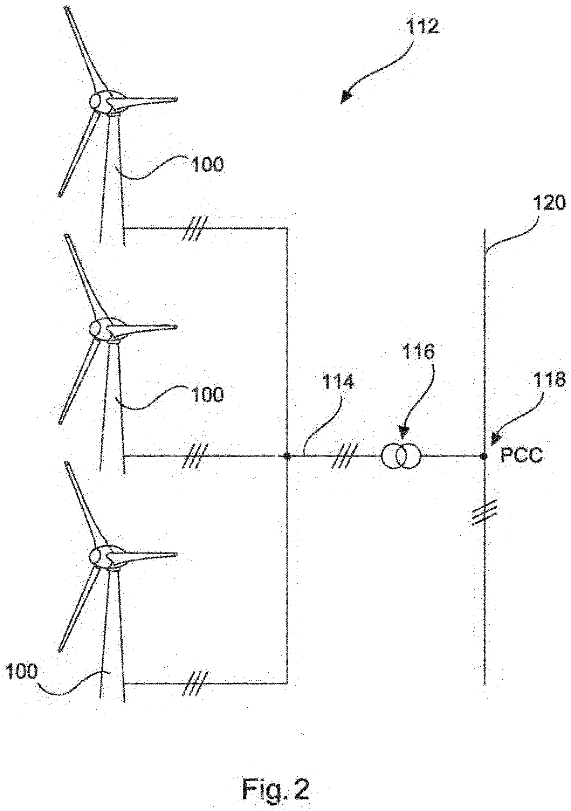

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

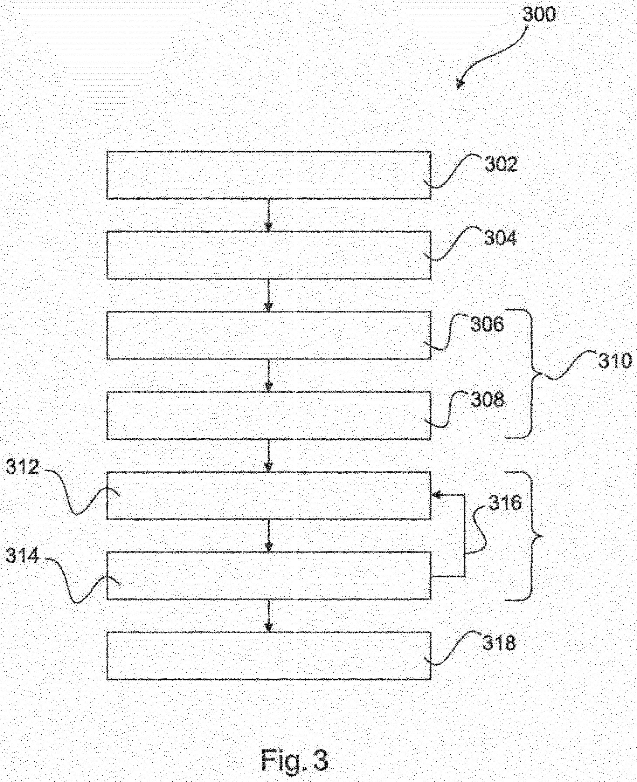

Fig. 3 veranschaulicht einen herkömmlichen Ablauf von einem Netzzusammenbruch über den Wiederaufbau bis zurück zu einem Netznormalbetrieb. Dieser Ablauf 300 beginnt im Block 302 mit einem Netzzusammenbruch, bei dem das elektrische Versorgungsnetz zusammenbricht. Das führt besonders dazu, dass Sicherheitsschalter geöffnet werden und Kraftwerke ihre Leistung nicht mehr an das elektrische Versorgungsnetz abgeben können. Entsprechend erläutert Block 304, dass nach dem Netzzusammenbruch zunächst thermische Kraftwerke versuchen, sich in einem Eigenversorgungsmodus zu fangen. Sie versuchen also so schnell wie möglich ihre Leistungserzeugung zu verringern, aber möglichst im Betrieb zu bleiben. Wenn möglich, sollen sie sich in dem Modus der Eigenversorgung fangen, in dem sie noch so viel Energie erzeugen, wie sie für ihre eigene Versorgung benötigen.

Es wird dann, besonders nachdem aber ein entsprechender Fehler im Netz behoben werden konnte oder zumindest das elektrische Versorgungsnetz oder ein Teil davon grundsätzlich betriebsbereit ist, ein Start schwarzstartfähiger Kraftwerke ausgeführt. Dieser Start der schwarzstartfähigen Kraftwerke ist in dem nächsten Block 306 veranschaulicht. Schwarzstartfähige Kraftwerke sind besonders solche, die ohne externe Versorgung durch elektrische Energie sich selbst starten können und die auch in der Lage sind, zumindest in geringem Umfang einen Abschnitt des elektrischen Versorgungsnetzes zu betreiben. In geringem Umfang kann hierbei auch bedeuten, dass einige Verbraucher des entsprechenden Abschnitts zunächst noch nicht zugeschaltet sind.

Basierend auf dem Start solcher schwarzstartfähigen Kraftwerke wird entsprechend auch ein Übertragungsnetzwerk durch diese schwarzstartfähigen Kraftwerke aufgebaut, was der Block 308 veranschaulicht. Die Blöcke 306 und 308 beschreiben somit einen Schwarzstart des elektrischen Versorgungsnetzes bzw. eines Teils davon, und dafür werden regelmäßig zwei bis vier schwarzstartfähige Kraftwerke benötigt. Diese beiden Blöcke 306 und 308 können als Schwarzstartschritte 310 zusammengefasst werden.

In dem Block 312 erfolgt als nächster Schritt das Verbinden von Verteilnetzen und Lasten mit dem Übertragungsnetz. Als weiterer Schritt wird in dem Block 314 vorgeschlagen, im Eigenbedarf laufende Kraftwerke zu verbinden. Von dem Block 314 kann zu dem Block 312 zurückgekehrt werden und in dieser Weise eine Schleife durchlaufen werden, in der nach und nach Verteilnetze und Lasten mit dem Übertragungsnetz verbunden werden und im Eigenbedarf laufende Kraftwerke verbunden werden. Diese Schleife 316, die aus diesen beiden Blöcken 312 und 314 im Wesentlichen besteht, kann auch als Netzwiederaufbau bezeichnet werden. In diesem Netzwiederaufbau wird somit der gesamte Kraftwerkspark wiederaufgebaut. Dieser Kraftwerkspark kann das elektrische Versorgungsnetz mit allen angeschlossenen Kraftwerken bezeichnen.

Ist dieser Netzwiederaufbau gemäß der Schleife 316 dann erfolgreich abgeschlossen worden, so kann in dem letzten Schritt gemäß Block 318 der Netznormalbetrieb wiederaufgenommen werden.

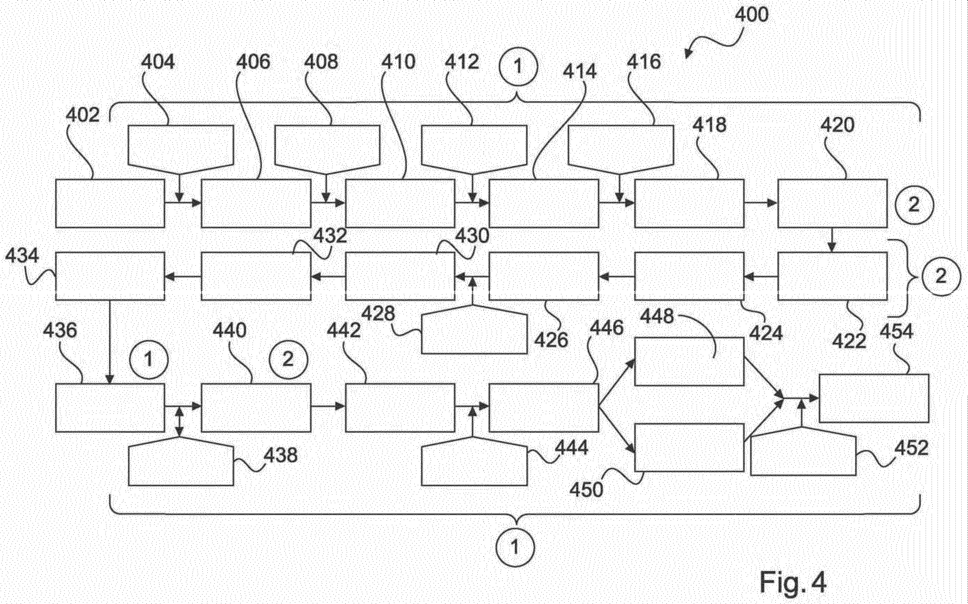

Ein zu dem Ablauf der Fig. 3 alternativer Ablauf 400 ist in Fig. 4 dargestellt. Dieser Ablauf 400 beschreibt den Ablauf für einen Windpark, welche Schritte also in einem Windpark auftreten, für ihn relevant sind oder zu beachten sind.

Dieser Ablauf 400 geht von einem Startzustand gemäß Block 402 aus, in dem sich der Windpark in einem Normalbetrieb befindet. Im Wesentlichen wird hier Leistung in Abhängigkeit der Windgeschwindigkeit in das elektrische Versorgungsnetz eingespeist, vorzugsweise so viel, wie aus dem Wind entnommen werden kann. Es tritt dann ein Netzzusammenbruch gemäß Block 404 auf. Die Windenergieanlagen des Windparks fahren ihren Betrieb dann definiert herunter und trennen sich vom Netz. Das veranschaulicht der Block 406. Die Kommunikation der Windenergieanlagen besonders mit einer zentralen Parksteuerung bleibt möglichst aufrechterhalten. Bei diesem Herunterfahren gemäß Block 406 können die Windenergieanlagen in einen Self-supply-Modus fallen, in dem sie so viel Energie erzeugen, wie sie selbst für ihren Betrieb benötigen. Ebenfalls kann der Windpark insgesamt in einen Self-supply-Modus fallen, in dem die Windenergieanlagen so viel Energie erzeugen, wie der Windpark insgesamt zum Aufrechterhalten seiner Funktionalität benötigt. Wird kein Self-supply-Modus verwendet, kann die Kommunikation beispielsweise über einen Energiespeicher aufrechterhalten werden.

Eine zentrale Parksteuerung, besonders eine, die durch eine unterbrechungsfreie Stromversorgung versorgt wird, behält ihre Kommunikation auch mit einem Netzbetreiber aufrecht. Zumindest erhält sie eine Kommunikationsmöglichkeit mit diesem aufrecht, was durch den Block 408 gekennzeichnet ist.

Als nächsten Schritt meldet dann der Netzbetreiber, der also das elektrische Versorgungsnetz betreibt, einen Totalausfall an die Parksteuereinheit, und dafür steht der Block 410. Damit ist dem Windpark, nämlich besonders der zentralen Parksteuerung, dann klar, dass ein Totalausfall vorliegt, sodass sich der Windpark bzw. die zentrale Parksteuereinheit darauf einstellen kann.

Wenn entsprechende Fehler im elektrischen Versorgungsnetz behoben sind oder der Netzbetreiber aus anderen Gründen glaubt, dass nun ein Start des elektrischen Versorgungsnetzes in Betracht kommt, stellt der Netzbetreiber eine Schwarzstartanfrage an den Windpark, besonders an die zentrale Parksteuereinheit, was durch den Block 412 repräsentiert wird. Der Windpark bzw. die zentrale Parksteuereinheit wechselt dann gemäß Block 414 in einen Schwarzstartbetriebsmodus. Dieser kann auch als Aufbaumodus bezeichnet werden. Die Blöcke ab Block 406 bis 412 können wahlweise auch bereits als Teil eines solchen Aufbaumodus betrachtet werden.

Als nächstes wird dann gemäß Block 416 vorgeschlagen, eine Wetterprognose einzuholen oder aufzustellen. Darauf basierend ermittelt die zentrale Parksteuerung gemäß Block 418 eine garantierte Mindestleistung, die sie in Kürze aufgrund der vorherrschenden und erwarteten Windgeschwindigkeit bereitstellen kann. Diese garantierte Mindestleistung wird auch an den Netzbetreiber gemeldet.

Als nächster Schritt wird gemäß Block 420 vorgeschlagen, dass die zentrale Parksteuereinheit ein Schwarzstartsignal an Schwarzstarteinheiten gibt. Ein solches Schwarzstartsignal bedeutet für die Schwarzstarteinheiten, wobei es gegebenenfalls auch eine einzige sein kann, dass sie die jeweiligen Schritte zum Ausführen eines Schwarzstarts durchführen. Schwarzstarteinheiten können Windenergieanlagen sein oder auch Einheiten mit Batterien. In jedem Fall beinhalten sie einen Umrichter bzw. Wechselrichter. Eine Schwarzstarteinheit kann jeweils ein Spannungsprägemittel und ein Erstversorgungsmittel sein. Beispielsweise kann eine Windenergieanlage als Spannungsprägemittel und eine weitere als Erstversorgungsmittel arbeiten. Es kommt auch in Betracht, dass jeweils nur ein oder mehrere Leistungsschränke als Spannungsprägemittel bzw. Erstversorgungsmittel arbeiten. Diese können zusammen oder jeweils in einer Windenergieanlage stehen und von dieser Energie erhalten. Es wird aber auch vorgeschlagen, dass spezielle Leistungsschränke grundsätzlich unabhängig von einer Windenergieanlage über einen Energiespeicher wie beispielsweise eine Batterie versorgt werden. Eine solche Batterie oder anderer Energiespeicher kann zwar im Windpark durch Energie der Windenergieanlagen geladen werden, wenn nämlich der Windpark und damit das elektrische Versorgungsnetz überhaupt in einem Normalbetrieb arbeitet, ansonsten muss aber kein Zusammenhang zwischen einer solchen Batterie bzw. anderem Energiespeicher und Windenergieanlagen im Windpark bestehen. Alternativ kommt auch in Betracht, dass eine solche Batterie bzw. anderer Energiespeicher bei einer Windenergieanlage oder in einer Windenergieanlage untergebracht ist und die Windenergieanlage ihre Wechselrichter oder Umrichter, also ihre Leistungsschränke oder einen Teil davon für einen Schwarzstart zusammen mit einer solchen Batterie bzw. anderem Energiespeicher zur Verfügung stellt.

Der nächste Schritt gemäß Block 422 sieht zunächst vor, dass ein Spannungsprägemittel, besonders ein spannungsprägender Leistungsschrank, eine interne Sammelschiene unter Spannung setzt. Als Spannungsamplitude kann zunächst eine geringe Spannung vorgesehen sein, so dass das Spannungsprägemittel 10 % einer Nennspannung des Energieerzeugungsnetzes bereitstellen kann. Das kann auch bedeuten, dass die Sammelschiene zunächst auch nur auf etwa 10% ihrer Spannung im Normalbetriebsmodus gebracht wird. Solche Spannungsprägemittel, insbesondere diese spannungsprägenden Leistungsschränke, halten dann somit eine möglichst konstante Spannung bereit. Sie speisen dabei aber vergleichsweise wenig Wirkleistung und auch wenig Blindleistung in das Parknetz des Windparks ein.

Als nächstes werden Erstversorgungsmittel und damit Stromprägemittel bzw. stromprägende Leistungsschränke sich verbinden und speisen Blindleistung zum Regeln der Sollspannung in das Parknetz ein. Dafür steht der Block 424. Die Spannungshöhe, die durch diese Blindleistungseinspeisung gestützt werden soll, orientiert sich an der Sollspannung, die der spannungsprägende Leistungsschrank gemäß Block 422 bereitstellt.

Die Spannungsprägemittel und Stromprägemittel bzw. spannungsprägenden Leistungsschränke und stromprägenden Leistungsschränke werden dann gemäß Block 426 so koordiniert bzw. weisen entsprechend unterschiedliche Regelungen auf, dass die stromprägenden Leistungsschränke im stationären Fall das Einspeisen von Wirk- und Blindleistung übernehmen. Idealisierend speist der spannungsprägende Leistungsschrank jeweils weder Wirk- noch Blindleistung ein.

Der Block 428 steht aber dafür, dass spannungsprägende Leistungsschränke transiente Zuschaltungen übernehmen. Sie gleichen also zunächst Leistungssprünge durch Zuschaltungen aus. Die stromprägenden Leistungsschränke übernehmen dann aber wieder die nötige Blindleistungs- und gegebenenfalls Wirkleistungseinspeisung.

Gemäß dem Block 430 verbinden sich Schwarzstarteinheiten nach und nach mit dem Parknetz. Das betrifft besonders spannungsprägende Leistungsschränke und stromprägende Leistungsschränke, die damit im Parknetz eine Sollspannung bereitstellen und gegebenenfalls auch weiter erhöhen können. Eine Schwarzstarteinheit umfasst wenigstens ein Spannungsprägemittel und ein Erstversorgungsmittel und kann bspw. als Schwarzstartcontainer ausgebildet sein, der solche Einheiten und ggf. auch noch einen Energiespeicher enthält, der zum Starten notwendige Energie bereitstellt.

Gemäß dem Block 432 werden dann weitere Einspeiser nach und nach mit dem Parknetz verbunden. Auch diese Einspeiser können auch mit einer besonders hohen Verstärkung Blindleistung einspeisen, um die Sollspannung zu stützen. Solche Einspeiser können besonders Stromprägemittel, also besonders stromprägende Leistungsschränke sein. Besonders sollen gemäß Block 432 aber weitere Einspeiser verbunden werden, die nicht unbedingt über besondere Eigenschaften zum Start des Energieerzeugungsnetzes geeignet sind, damit möglichst der gesamte Park eingebunden werden kann. Es werden gemäß Block 432 also im Wesentlichen die übrigen, normalen Einspeiser zugeschaltet.

Wenn dann ausreichend, vorzugsweise alle Einspeiser des Windparks mit dem Parknetz verbunden sind, kann im nächsten Schritt gemäß Block 434 der Parktrafo zugeschaltet werden. Der Parktrafo, also der Transformator, über den das Parknetz in das elektrische Versorgungsnetz einspeist bzw. über den Energie mit dem elektrischen Versorgungsnetz und dem Windpark ausgetauscht wird, wird gemäß diesem Schritt des Blocks 434 mit dem Parknetz verbunden. Der Parktrafo ist dabei mit einer Seite mit dem Parknetz verbunden, mit der anderen Seite aber noch nicht mit dem elektrischen Versorgungsnetz verbunden.

Mit diesem zugeschalteten Parktrafo wird dann im nächsten Schritt gemäß Block 436 die Sollspannung im Parknetz auf Nennspannung des Parknetzes hochgefahren. Auf eine solche Funktionalität des Hochfahrens des Parktrafos kann aber auch verzichtet werden. Wenn dieser Vorgang abgeschlossen ist, das Parknetz also Nennspannung aufweist, wird vorgeschlagen, dass die zentrale Parksteuereinheit ihre Bereitschaft zum Zuschalten an den Netzbetreiber meldet, was durch den Block 438 gekennzeichnet ist.

Wenn der Netzbetreiber einverstanden ist, zumindest kein Zuschalten verbietet, verbindet sich der Windpark mit dem schwarzgefallenen Netzabschnitt des elektrischen Versorgungsnetzes in dem nächsten Schritt gemäß Block 440. Der Windpark ist dann mit dem elektrischen Versorgungsnetz verbunden und kann Wirk- und Blindleistung in das elektrische Versorgungsnetz einspeisen. Besonders kann er so viel Wirkleistung in das elektrische Versorgungsnetz einspeisen, wie er in dem Block 418 als garantierte Mindestleistung bereits an den Netzbetreiber übertragen hat. Gegebenenfalls kann hier eine Erneuerung dieser Information über die garantierte Mindestleistung an den Netzbetreiber gemeldet werden. Es sollte aber von dem Schritt der Meldung garantierter Mindestleistung gemäß Block 418 bis zum Schritt, in dem der Park sich mit dem schwarzgefallenen Netzabschnitt verbindet, gemäß Block 440, nicht sehr viel Zeit vergehen, nämlich im Idealfall nur einige Minuten, so dass die Windprognose und die daraus abgeleitete garantierte Mindestleistung noch zutreffend sein sollte.

Jedenfalls baut dann der Netzbetreiber das elektrische Versorgungsnetz zumindest bis zu dieser garantierten Mindestleistung auf. Für diesen Schritt steht der Block 442. Der Netzbetreiber kann hierfür besonders Verbraucher, Verbrauchergruppen oder Verbrauchercluster zuschalten.

Überhaupt übernimmt dann der Netzbetreiber gemäß dem Block 444 eine Leistungssteuerung des betreffenden elektrischen Versorgungsnetzes, zumindest des hier relevanten Abschnitts davon.

Nun existiert ein dem Grund nach mit Nennspannung arbeitendes elektrisches Versorgungsnetz bzw. entsprechender Netzabschnitt, und der Netzbetreiber kann nun gemäß dem nächsten Schritt im Block 446 weitere Einspeiser mit dem Netz verbinden. Solche Einspeiser können weitere Windparks, aber auch herkömmliche Kraftwerke sein.

Das elektrische Versorgungsnetz bzw. der betrachtete Abschnitt davon ist nun auf einem guten Wege zu einem Normalbetrieb. Noch liegt dieser Normalbetrieb aber nicht vor, und auf dem weiteren Weg dahin wird nun je nach Netzsituation vorgeschlagen, dass in einem Fall die Windenergieanlage und damit der Windpark in einen Netzwiederaufbaumodus wechselt, für den der Block 448 steht. Ein solcher Netzwiederaufbaumodus betrifft besonders einen Modus, bei dem getrennte Netzabschnitte nach und nach verbunden und dabei gegebenenfalls auch nach und nach hochgefahren werden.

Alternativ verbleibt jede Windenergieanlage und damit der Windpark in dem Schwarzstartmodus, der hier auch als Aufbaumodus bezeichnet wird. Dabei speisen die Windenergieanlagen bzw. der Windpark eine Wirkleistung gemäß einer Vorgabe des Netzbetreibers ein. Gleichzeitig macht jede Windenergieanlage bzw. der Windpark eine Spannungs- und Frequenzhaltung. Grundsätzlich kann der Windpark diese Spannungs- und Frequenzhaltung durchführen, wobei dies regelmäßig durch die Windenergieanlagen jeweils eigenständig durchgeführt werden kann. Die Aufgabe einer zentralen Parksteuereinheit kann sich dann, also gemäß dieser einen Ausführung, auf das Bereitstellen eines Sollwertes für die Wirkleistung für jede Windenergieanlage, basierend auf einem insgesamt vorgegebenen Wirkleistungssollwert durch den Netzbetreiber für den Park konzentrieren. Der Netzbetreiber gibt also einen Wirkleistungssollwert an die zentrale Parksteuereinheit. Die zentrale Parksteuereinheit gibt basierend darauf einzelne Wirkleistungssollwerte, vorzugsweise durch Angaben etwaiger prozentualer Werte, an die Windenergieanlagen. Die Windenergieanlagen speisen diese Wirkleistung entsprechend ihrem Sollwert ein und führen gleichzeitig abhängig einer Spannungs- und Frequenzmessung oder anderweitigen Erfassung eine Stützung, insbesondere Haltung dieser Spannungs- und Frequenzwerte durch. Dieser beibehaltene Schwarzstartmodus, in dem die Windenergieanlagen eine Spannungs- und Frequenzhaltung durchführen, ist alternativ zu dem Block 448 gemäß Block 450 vorgesehen.

Jedenfalls sollte dadurch dann ein Schwarzstart durchgeführt worden sein und gegebenenfalls ein Netzaufbau erreicht worden sein, und der Netzbetreiber kann schließlich beurteilen, ob das elektrische Versorgungsnetz wieder normal arbeitet. In dem Fall meldet er gemäß Block 452 das Vorliegen eines Normalbetriebs.

Daraufhin wird im Grunde im letzten Schritt gemäß Block 454 der Park, besonders gesteuert durch die zentrale Parksteuereinheit, in seinen Normalbetrieb wechseln. Dieser Normalbetrieb bedeutet besonders, dass möglichst viel Wirkleistung erzeugt und eingespeist wird, nämlich möglichst so viel Wirkleistung, wie aufgrund des vorhandenen Windes erzeugt werden kann. Außerdem wird hierbei möglichst jede Windenergieanlage mit einer situationsangepassten Drehzahl betrieben. Im Volllastbetrieb wird sie also möglichst mit Nenndrehzahl betrieben und in einem Teillastbetrieb entsprechend einer Drehzahlleistungskennlinie, wobei natürlich auch andere normale Betriebsführungsmöglichkeiten in Betracht kommen können.

Zu diesem beschriebenen Ablauf ist besonders darauf hinzuweisen, dass einige Elemente besonders Aspekte der Kommunikation betreffen, und diese sind mit dem Bezugszeichen 1 gekennzeichnet. Das betrifft besonders die Blöcke 404 - 420 und 438 - 452.

Aspekte zu Besonderheiten der Regelung sind mit dem Bezugszeichen 2 gekennzeichnet und betreffen besonders die Blöcke 420 - 436 und 440.

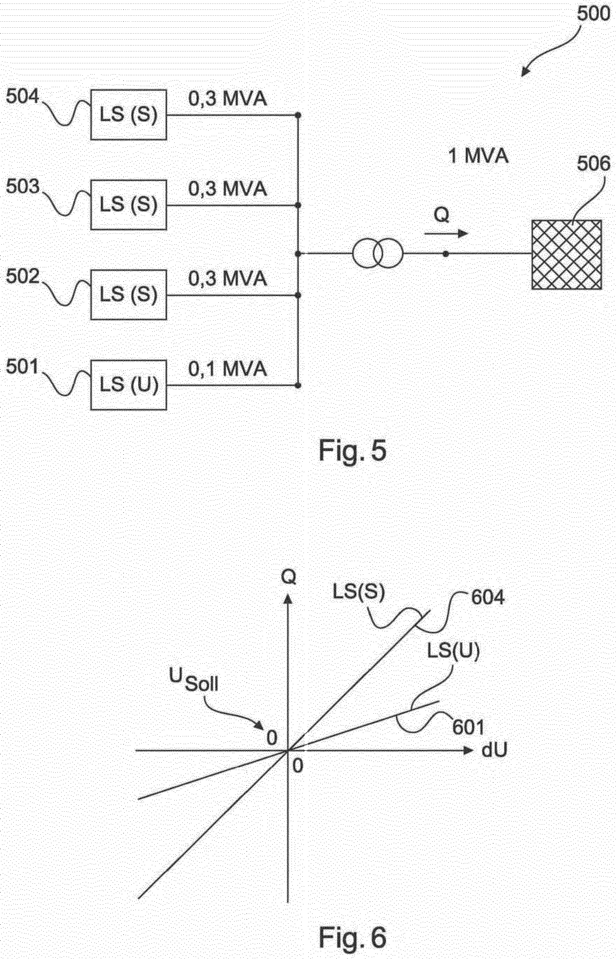

Fig. 5 veranschaulicht einen vereinfachten Windpark 500 in einem Wiederaufbaumodus. Dieser weist in dem gezeigten Beispiel zumindest vier Leistungsschränke 501 bis 504 auf. Der erste Leistungsschrank 501 ist hier als spannungsprägender Leistungsschrank vorgesehen. Er bildet somit ein Spannungsprägemittel. Dieser spannungsprägende Leistungsschrank 501 soll besonders eine Spannung vorgeben. Dabei soll er auch Leistung, insbesondere Blindleistung Q, einspeisen können, aber nur in einem geringen Umfang. Beispielhaft ist hier ein Wert von 0,1 MVA angegeben.

Die drei übrigen Leistungsschränke 502 - 504 sind als stromprägende Leistungsschränke, also als Stromprägemittel, vorgesehen. Sie können einzeln oder in Summe ein Erstversorgungsmittel bilden. Jeder dieser Leistungsschränke soll eine größere Blindleistung Q als der erste Leistungsschrank 501 einspeisen können. Beispielhaft ist hier als dimensionierende Größe für jeden der Leistungsschränke 502 - 504 ein Blindleistungswert von jeweils 0,3 MVA angegeben. Zusammen können diese vier Leistungsschränke 501 - 504 eine Blindleistung Q in Höhe von 1 MVA in das beispielhaft gezeigte Netz 506 einspeisen.

In diesem Windpark 500 können auch weitere Einspeiser, besonders weitere Windenergieanlagen, vorhanden sein, die ebenfalls einen Aufbaumodus unterstützen können oder die erst in einem Normalbetrieb oder im weiteren Verlauf des Aufbaumodus zugeschaltet werden.

Fig. 5 soll aber besonders die anfängliche Aufteilung verdeutlichen, demnach eine Einheit spannungsprägend arbeitet, hier der Leistungsschrank 501, und dabei wenig Blindleistung einspeisen soll, wohingegen weitere Einheiten, oder gegebenenfalls nur eine weitere Einheit, stromprägend arbeiten, hier die Leistungsschränke 502 - 504, und auch zum Spannungsstützen viel Blindleistung Q einspeisen können. Die beispielhaft gezeigten Leistungsschränke 501 - 504 können beispielsweise auch vollständig in einem Schwarzstartcontainer als Schwarzstarteinheit untergebracht sein, der besonders für einen solchen Aufbaumodus vorgesehen ist und eine Batterie beinhalten kann, die ausreichend Energie für einen solchen Aufbaumodus bereitstellt, oder anderen Energiespeicher.

Die Leistungsschränke 501 - 504 können aber auch jeweils repräsentativ für eine Windenergieanlage stehen, die entweder spannungsprägend gemäß Leistungsschrank 501 oder stromprägend gemäß einem der Leistungsschränke 502 - 504 arbeitet. Jede Windenergieanlage kann dabei natürlich mehr Leistung, auch mehr Blindleistung, erzeugen und einspeisen und dafür möglicherweise mehrere Leistungsschränke aufweisen.

Fig. 6 veranschaulicht dazu unterschiedliche Statiken, die eine Blindleistung Q in Abhängigkeit einer Spannungsabweichung dU angeben. Nach den gezeigten Kennlinien sollen die entsprechenden Leistungsschränke 501 - 504 der Fig. 5 gesteuert werden, nämlich so, dass der Leistungsschrank 501, der spannungsprägend arbeitet, nach der Kurve 601 arbeitet, wohingegen die stromprägenden Leistungsschränke 502 - 504 jeweils nach der Kurve 604 arbeiten. Jeder der Leistungsschränke 502 - 504 speist somit bei gleicher Spannungsabweichung, also bei gleichem dU in dem gezeigten Beispiel dreimal so viel Blindleistung Q ein, wie der spannungsprägende Leistungsschrank 501.

Wobei der spannungsprägende Leistungsschrank 501 die Spannungsabweichung dU über eine Sollspannung entsprechend der sich einstellenden Blindleistung Q anpasst und die stromprägenden Schaltschränke die Blindleistung Q entsprechend der erfassten Spannungsabweichung dU anpasst. Diese Spannungsabweichung kann an Ausgangsklemmen des Wechselrichters erfasst werden.

Die Grafik der Fig. 6 zeigt dabei in ihrem Ursprung, also dem Mittelpunkt des Koordinatenkreuzes, den Blindleistungswert 0 als auch die Differenzspannung dU mit dem Wert 0. Dass die Differenzspannung dU den Wert 0 aufweist, bedeutet, dass die Spannung dort den Sollwert Uₛₒₗₗ aufweist.

Figur 6 zeigt Statiken für eine Blindleistung in Abhängigkeit einer Spannungsabweichung. In gleicher Art und Weise werden auch Statiken für eine Wirkleistung in Abhängigkeit einer Frequenzabweichung vorgeschlagen. Besonders könnte in Figur 6 an der Abszisse die Spannungsabweichung dU gegen eine Frequenzabweichung df und an der Ordinate die resultierende Blindleistung Q gegen eine resultierende Wirkleistung P getauscht werden. Es ergibt sich dann eine Darstellung für Statiken für eine Wirkleistung in Abhängigkeit einer Frequenzabweichung. Auch dafür wird vorgeschlagen, dass das Erstversorgungsmittel, also hier die stromprägenden Leistungsschränke 502 - 504, jeweils mehr Wirkleistung bei gleicher Frequenzabweichung einspeisen, als das Erstversorgungsmittel, also hier der spannungsprägende Leistungsschrank 501.

Sinngemäß speist auch hier der spannungsprägende Leistungsschrank 501 eine Spannung mit der Frequenz f entsprechend der sich einstellenden Wirkleistung ein und die stromprägenden Schaltschränke speisen die Wirkleistung entsprechend der erfassten Frequenz bzw. Frequenzabweichung ein.

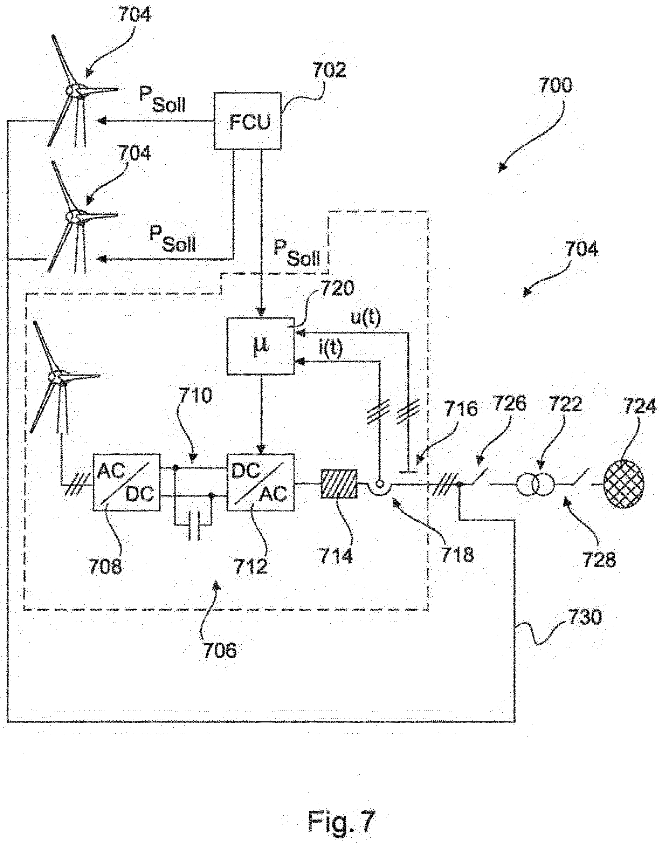

Fig. 7 zeigt schematisch einen Windpark 700 mit einer zentralen Parksteuereinheit 702 mit exemplarisch drei Windenergieanlagen 704, von denen zwei nur durch ein Symbol angedeutet sind und bei einer zusätzlich schematisch eine Steuerungseinrichtung 706 gezeigt ist.

Die gezeigte Steuerungseinrichtung 706 weist eine Gleichrichteinheit 708 mit einem angeschossenen Gleichspannungszwischenkreis 710 und einem nachgeschalteten Wechselrichter 712 auf. Die Gleichrichteinheit 708 mit dem Gleichspannungszwischenkreis 710 und dem Wechselrichter 712 können auch zusammen als Umrichter bezeichnet werden.

Die Gleichrichteinheit 708 wird von einem Generator der Windenergieanlage gespeist, was in Fig. 7 nur angedeutet ist. Die so erhaltene Energie bzw. Leistung wird von der Gleichrichteinheit 708 gleichgerichtet und auf dem Gleichspannungszwischenkreis 710 bereitgestellt. Der Wechselrichter 712 erzeugt daraus eine dreiphasige Wechselspannung bzw. Wechselstrom. Dazu ist an dem Wechselrichter eine Drossel 714 angeschlossen, auf die der Wechselrichter abgestimmt ist. Am Ausgang dieser Drossel 714 ist somit eine Spannung u(t) und ein Strom i(t) messbar, und es ist auch zum Messen ein Spannungsmessmittel 716 und ein Strommessmittel 718 vorgesehen. Die so erfasste Spannung und der so erfasste Strom werden zu einer Wechselrichtersteuerung 720 zurückgeführt, und davon abhängig steuert diese Wechselrichtersteuerung 720 den Wechselrichter 712 an.

Die zentrale Parksteuereinheit 702 kann an jede Windenergieanlage 704 einen Leistungssollwert Pₛₒₗₗ übertragen. Wenn die Windenergieanlagen 704 jeweils gleich groß sind, kommt auch in Betracht, dass diese Werte gleich sind. Tatsächlich sollen diese Leistungssollwerte Pₛₒₗₗ nur repräsentativ für mögliche Leistungssollwerte stehen, die auch unterschiedliche Werte aufweisen können, oder als relative Werte, bspw. Prozentwerte, übertragen werden können.

In der dargestellten Steuerungseinrichtung 706 der einen Windenergieanlage 704 wird verdeutlicht, dass dieser Leistungssollwert Pₛₒₗₗ der Wechselrichtersteuerung 720 übergeben wird. Es kommen in der Windenergieanlage 704 aber auch andere Steuerungs- oder Auswertungsarchitekturen in Betracht.

Die in Fig. 7 gezeigte Steuerungseinrichtung 706 kann als stromprägende Einheit oder als spannungsprägende Einheit arbeiten. Wenn sie als spannungsprägende Einheit arbeitet, wird besonders die rückgeführte Spannung u(t) zur Steuerung des Wechselrichters 712 verwendet. Dieser kann dann ein Spannungssignal so erzeugen und ausgeben, dass es besonders einem vorgegebenen Spannungsverlauf entspricht. Der Wechselrichter arbeitet dadurch spannungsprägend.

Er kann auch stromprägend arbeiten, indem er sich im Wesentlichen an dem erfassten und zurückgeführten Strom i(t) orientiert und ein entsprechendes Stromsignal erzeugt, also so arbeitet, dass sein Ausgang besonders dem Strom gemäß einem Stromsollwert nachgeführt wird.

Bei dieser Strom- und Spannungsprägung geht es besonders darum, dass das konkrete Sinussignal, das der Wechselrichter erzeugt bzw. zu erzeugen versucht, vorgegeben wird. Entsprechend sind in der Fig. 7 zur Rückführung für die Spannung und den Storm die Augenblickswerte u(t) bzw. i(t) dargestellt. Natürlich kann die Wechselrichtersteuerung 720 außerdem auch die Amplitude der jeweiligen Signale im Sinne eines Effektivwertes auswerten und verwenden, falls nötig. Auch dieses Zurückführen der Augenblickswerte ist jeweils phasenweise zu verstehen, es werden also drei Stromwerte und drei Spannungswerte jeweils zurückgeführt.

Somit kann der Wechselrichter 712 auf unterschiedliche Arten arbeiten und dabei eine Leistung erzeugen und über einen Parktransformator 722, der auch vereinfacht als Parktrafo bezeichnet werden kann, in das Netz 724 einspeisen. Die übrigen Windenergieanlagen können über denselben Parktrafo 722 in das elektrische Versorgungsnetz 724 einspeisen.

Außerdem ist sowohl parkseitig als auch zum elektrischen Versorgungsnetz 724 hin jeweils ein Trennschalter 726 bzw. 728 vorgesehen. Vor dem Trennschalter 726 ist eine Verbindungsleitung zu den übrigen Windenergieanlagen 704 angedeutet, die hier für ein Parknetz 730 steht.

Für einen Schwarzstart, insbesondere zum Betreiben der Steuerungseinrichtung 706 in einem Aufbaumodus, kann eine zusätzliche Batterie vorgesehen sein, die hier nicht dargestellt ist. Eine solche Batterie kann beispielsweise den Gleichspannungszwischenkreis 710 speisen. Eine Gleichspannung einer solchen Batterie kann dadurch auf einfache Art und Weise bereitgestellt werden und gegebenenfalls durch den Wechselrichter 712 in eine Wechselspannung bzw. einen Wechselstrom gewandelt werden.

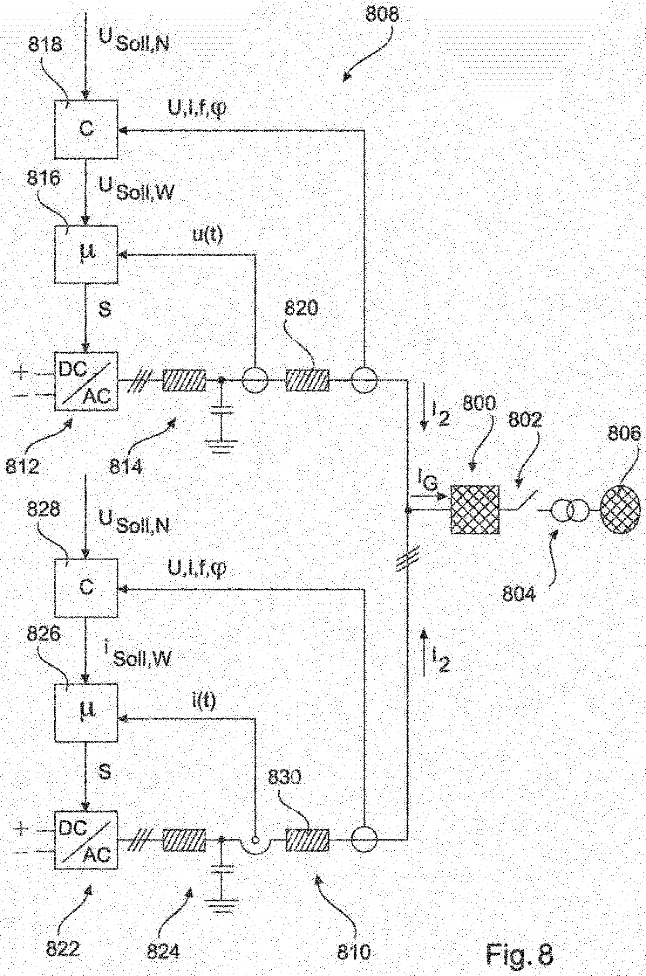

Figur 8 zeigt veranschaulichend ein Energieerzeugungsnetz 800, das über einen Trennschalter 802 und einen Parktrafo 804 an ein elektrisches Versorgungsnetz 806 ankoppelbar ist.

Veranschaulichend ist ein Spannungsprägemittel 808 und ein Erstversorgungsmittel 810 gezeigt, die selbst auch Teil des Energieerzeugungsnetzes 800 sind.

Das Spannungsprägemittel 808 weist einen spannungsprägenden Wechselrichter 812 auf, der eine Spannung u(t) an seinem Ausgang erzeugt und die besonders am Ausgang des angedeuteten ersten Ausgangsfilters 814 gemessen wird. Die Spannung u(t) wird ständig gemessen und in den ersten Mikrocontroller 816 zurückgeführt. Der erste Mikrocontroller 816 wertet insoweit die Augenblickswerte dieser gemessenen Spannung u(t) aus. Auch diese Messwerte sind, genauso wie die ausgegebene Spannung, dreiphasig. Zur Erläuterung der Figur 8 ist es aber nicht erforderlich, auf diese Dreiphasigkeit einzugehen. Das gilt auch für das Erstversorgungsmittel 810.

Der erste Mikrocontroller 816 erhält außerdem ein Spannungssignal u_{soll,w}, das die einzustellende Spannung u(t) nach Betrag, Frequenz und Phase spezifiziert.

Dieser Sollwert u_{soll,w} wird in der ersten Wechselrichtersteuerung 818 erzeugt. Er hängt ab von einer Sollspannung U_{soll,N} und den gemessenen Werten U, I, f, φ, die am Ausgang der ersten Netzdrossel 820 gemessen werden.

Das Erstversorgungsmittel 810, das stromprägend arbeitet, weist einen stromprägenden Wechselrichter 822 auf, der ähnlich wie der spannungsprägende Wechselrichter 812 arbeitet, aber auf einen Ausgangsstrom i(t) regelt. Dieser Ausgangsstrom i(t) wird am Ausgang des angedeuteten zweiten Ausgangsfilters 824 erfasst und in dem zweiten Mikrocontroller 826 ausgewertet. Der zweite Mikrocontroller 826 erhält somit einen Stromsollwert i_{soll,w}, der den zu erzeugenden Strom i(t) nach Betrag, Frequenz und Phase vorgibt. Der zweite Mikrocontroller 826 steuert entsprechend die Schalthandlungen in dem stromprägenden Wechselrichter 822, was durch das Bezugszeichen S angedeutet ist. Entsprechend steuert im Übrigen der erste Mikrocontroller 816 Schalthandlungen in dem Wechselrichter 812.

Der Stromsollwert iₛₒₗₗ, _{w_}wird in der zweiten Wechselrichtersteuerung 828 bestimmt. Er hängt ab von der Spannung U, dem Strom I, der Frequenz f und dem Phasenwinkel φ und diese Größen werden am Ausgang der zweiten Netzdrossel 830 erfasst. Auch die zweite Wechselrichtersteuerung 828 empfängt auch noch als Eingangsgröße eine Sollspannung U_{soll,N}.

Das Spannungsprägemittel 808 erzeugt somit im Ergebnis einen ersten Strom I₁ und das Erstversorgungsmittel 810 erzeugt im Ergebnis einen zweiten Strom I₂. Diese beiden Ströme I₁ und I₂ summieren sich zu dem gemeinsamen Strom I_{G}. Dieser fließt veranschaulichend in das symbolisierte Energieerzeugungsnetz 800 ein. Das ist veranschaulichend zu verstehen, weil auch das Spannungsprägemittel 808 und das Erstversorgungsmittel 810 Teil des Energieerzeugungsnetzes 800 sind. Insoweit fließt der gemeinsame Strom I_{G} in den verbleibenden Teil des Energieerzeugungsnetzes.

Im Betrieb, wenn beispielsweise ein Blindleistungssprung im Energieerzeugungsnetz 800 auftritt, macht sich das in dem Gesamtstrom I_{G} bemerkbar. Weil der Ausgangsstrom I₂ des ersten Versorgungsmittels 810 von diesem geregelt wird, führt eine Änderung des gemeinsamen Stroms I_{G} somit zunächst nur zu einer Änderung des ersten Stroms I₁ des Spannungsprägemittels 808.

Die Änderung des gemeinsamen Stroms I_{G} hat somit zunächst zu einer Änderung des ersten Stroms I₁ geführt und das hat die erste Wechselrichtersteuerung 818 erfasst. Die erste Wechselrichtersteuerung 818 erfasst daraus in Abhängigkeit einer _Blindleistungsstatik oder Wirkleistungsstatik einen neuen Wert für eine Spannungsamplitude und/oder eine Frequenz. Entsprechend wird das Spannungssollsignal u_{soll,w} angepasst und an den ersten Mikrocontroller 816 übergeben. Dieser steuert dann entsprechend den spannungsprägenden Wechselrichter 812 an. Das führt entsprechend zu einer Änderung der Spannungsamplitude und/oder der Frequenz der Spannung und das wird von dem Erstversorgungsmittel 810 durch die Messung am Ausgang der zweiten Netzdrossel 830 gemessen und in der zweiten Wechselrichtersteuerung 828 ausgewertet. Davon abhängig wird dann ein neuer Blindleistungswert und/oder ein neuer Wirkleistungswert berechnet, nämlich abhängig von der zugrundeliegenden Blindleistungsstatik oder Wirkleistungsstatik. Entsprechend wird ein Sollstromsignal i_{soll,w} vorgegeben und dem zweiten Mikrocontroller 826 übergeben. Dieser steuert dann den stromprägenden Wechselrichter 822 entsprechend an. Das Ergebnis ist, dass sich nun der zweite Strom I₂ ändert, wodurch sich der erste Strom I₁ auch ändert und das wiederum zu einer neuen Anpassung durch die erste Wechselrichtersteuerung 818 führt, nämlich wieder basierend auf den entsprechenden Statiken, also der Blindleistungsstatik und/oder der Wirkleistungsstatik.

Im Ergebnis werden sich somit das Spannungsprägemittel 808 und das Erstversorgungsmittel 810 so aufeinander einstellen, dass sie eine entsprechende Wirk- oder Blindleistung entsprechend der für sie relevanten Statik bei gleicher Spannungsabweichung bzw. gleicher Frequenz einspeisen.

Es wird somit eine Lösung zum Starten eines Energieerzeugungsnetzes vorgeschlagen, besonders zum Starten eines Parknetzes. Dazu wird noch auf folgende allgemeine Punkte hingewiesen.

Ein wichtiger Aspekt zum Starten eines Energieerzeugungsnetzes und damit im Ergebnis auch zum Starten und Wiederaufbauen eines elektrischen Versorgungsnetzes bzw. eines Abschnitts davon ist eine geeignete Kommunikation. Dazu wird vorgeschlagen, dass für eine zentrale Parksteuereinheit eine unterbrechungsfreie Stromversorgung vorgesehen ist. Diese weist besonders eine Batterie auf, um auch bei Stromausfall im Netz ausreichend Energie für das Betreiben der zentralen Parksteuereinheit bereitzustellen. Außerdem oder alternativ kann eine Stromversorgung in einem Self-supply-Modus der Windenergieanlage, also einem Selbsterhaltungsmodus der Windenergieanlage oder des Windparks, erfolgen. Dazu kann eine direkte Verbindung über ein Gleichspannungskabel zur Windenergieanlage bestehen, beispielsweise zu einem Gleichspannungszwischenkreis. Außerdem oder alternativ kann auch eine Wechselspannungsverbindung zu einem Wechselspannungsausgang eines Wechselrichters der Windenergieanlage vorgesehen sein. Es kommt letztlich auch in Betracht, dass die zentrale Parksteuereinheit örtlich in einer Windenergieanlage untergebracht ist und dort vorzugsweise Energie der Windenergieanlage verwendet, die diese in einem Selbsterhaltungsmodus, also einem Self-supply-Modus, erzeugt.

Es werden auch Kommunikationsmodule in den Windenergieanlagen und gegebenenfalls Schwarzstarteinheiten vorgeschlagen. Hierfür kann besonders eine Kommunikation nach dem System PoE vorgesehen sein, bei dem eine Stromversorgung über ein vorhandenes Ethernetkabel erfolgt. Dabei wird besonders vorgeschlagen, dass Energie aus der zentralen Parksteuereinheit, die besonders durch eine unterbrechungsfreie Stromversorgung vorhanden sein kann, über das Ethernetkabel den Windenergieanlagen zugeführt wird.

Außerdem oder alternativ kann vorgeschlagen werden, für jede Windenergieanlage eine eigene Batterie vorzusehen oder zumindest für einige Windenergieanlagen mehrere eigene Batterien.

Es kommt auch in Betracht, dass die Windenergieanlage sich selbst in einem Selbsterhaltungsmodus versorgt, sobald sie sich nach dem Netzausfall gefangen hat.

Weiterhin wird eine Kommunikation mit dem Netzbetreiber vorgeschlagen, nämlich dass dazu eine Kommunikationsschnittstelle vorgesehen ist.

Über eine solche Kommunikationsschnittstelle soll besonders kommuniziert werden, wenn ein Netzzusammenbruch vorliegt und auch wenn ein Normalbetrieb wieder vorliegt. Diese Informationen sollen besonders die Netzbetreiber an die zentrale Parksteuereinheit übertragen.

Ebenfalls kann darüber eine Schwarzstartanfrage von dem Netzbetreiber an die zentrale Parksteuereinheit gestellt werden, und umgekehrt kann die zentrale Parksteuereinheit darüber gegebenenfalls ihre Bereitschaft zum Durchführen eines solchen Schwarzstarts geben.

Weiterhin soll darüber eine Wetterprognose von der zentralen Parksteuereinheit empfangen oder übertragen werden. Resultierend dazu soll die zentrale Parksteuereinheit eine garantierte Mindestleistung an den Netzbetreiber übertragen, damit dieser basierend auf dieser garantierten Mindestleistung planen kann. Auch die vorgenannte Schwarzstartanfrage kann von einer solchen gelieferten garantierten Mindestleistung abhängen.

Weiterhin wird vorgeschlagen, eine solche Kommunikationsstelle mit dem Netzbetreiber für eine Leistungssteuerung zu verwenden. Das betrifft besonders das Vorgeben von Wirkleistungssollwerten durch den Netzbetreiber an die zentrale Parksteuereinheit. Besonders kann dies auch für einen Netzwiederaufbau verwendet werden, der Teil des Startens des Energieerzeugungsnetzes sein kann. Vorzugsweise kann der Netzbetreiber auch steuernd eingreifen, insbesondere zwischen Regelungsarten umschalten, besonders zwischen dem Normalbetriebsmodus und dem Aufbaumodus.

Schließlich kann auch ein Modus übertragen werden, der diese Station des elektrischen Versorgungsnetzes nach Verbinden weiterer Einheiten angibt. Hierbei können Informationen über einen Stand eines Netzwiederaufbaus oder weiterer Spannungs- und Frequenzhaltungen übertragen werden. Sowohl ein erreichter Netzwiederaufbau als auch ein gewünschter Netzwiederaufbau kann hier kommuniziert werden. Auch eine funktionierende Spannungs- und Frequenzhaltung oder eine erwünschte Spannungs- und Frequenzhaltung kann hierüber kommuniziert werden.

In einem Schwarzstart Modus, der den beschriebenen Aufbaumodus enthält oder ihm entspricht, sind in einem Windpark besonders die Windenergieanlagen und ggf. eine zentrale Parksteuereinheit betroffen.

Zunächst wird vorgeschlagen, ein Signal zum Trennen aller Leistungsschalter auf Nieder-, Mittel- und Hochspannungsseite zu übertragen, soweit diese Spannungsebenen vorhanden sind.

Weiterhin wird vorgeschlagen, ein Schwarzstartsignal an Schwarzstarteinheiten zu übertragen. Das können Windenergieanlagen sein, die entsprechend vorbereitet sind, besonders solche, die als Spannunsprägemittel und/oder als Erstversorgungsmittel arbeiten können.

Solche Schwarzstarteinheiten bauen dann ein internes Netz auf.

Dazu wird besonders vorgeschlagen, dass eine spannungsprägende Windenergieanlage, und/oder ein Spannungsprägender Leistungsschrank, der Teil der Windenergieanlage sein kann, bspw. aber auch eine USV sein kann, oder beinhalten kann, eine DC-Sammelschiene mit verringerter Spannung online setzt. Er sorgt also dafür, dass eine Sammelschiene, also eine Gleichspannungszwischenkreis eines Umrichters bzw. Wechselrichters, zumindest eine gegenüber einem normalen Betriebsmodus verringerte Spannung aufweist.

Die Versorgung aus einem Gleichspannungszwischenkreis kann in einem sogenannten Self-Supply-Mode erfolgen, der auch als Selbsterhaltungsmodus bezeichnet werden kann, in dem die Windenergieanlage so viel Strom erzeugt, wie sie selbst für ihre eigene Versorgung benötigt. Außerdem oder alternativ kommt auch eine Versorgung aus einer Batterie oder anderem Energiespeicher in Betracht. Bspw. kann auch eine Batterie vorgesehen sein, um zunächst die betreffende Windenergieanlage überhaupt zu starten.

Es kommt auch eine Ankopplung an einem Gleichspannungszwischenkreis einer USV in Betracht.

Für Windenergieanlage wird besonders vorgeschlagen, dass erst eine Versorgung aus einer Batterie oder ähnlichen Speicher, wie bspw. einem Kondensator erfolgt, und dann aus dem Gleichspannungszwischenkreis der Windenergieanlage, wenn diese in ihren Self-Supply-Mode hochgefahren ist.

In einem weiteren Schritt wird vorgeschlagen, dass sich stromprägende Windenergieanlagen, zumindest stromprägende Leistungsschränke verbinden und zusammen Leistung einspeisen können.

Es wird dann vorgeschlagen, dass Arbeitspunkte des Energieerzeugungsnetzes, also besonders des Parknetzes, so eingestellt werden, dass spannungsprägende Leistungsschränke, bzw. spannungsprägende Windenergieanlagen möglichst wenig Wirk- und/oder Blindleistung erzeugen.

Dann werden Transformatoren der Windenergieanlagen oder anderer Einheiten im Energieerzeugungsnetz zugeschaltet. Es wird im Windpark ein Parknetz für die am Start des Windparks beteiligten Einheiten, insbesondere Windenergieanlagen zugeschaltet und diese Einheiten, insbesondere Windenergieanlagen, sind dann miteinander verbunden und können zusammenarbeiten.

Weitere Schwarzstarteinheiten, falls vorhanden, können sich synchronisieren und unterstützen.

In einem weiteren Schritt verbinden sich die restlichen Einheiten, besonders die restlichen Windenergieanlagen, wenn das Energieerzeugungsnetz ein Windpark ist.

Weiterhin kann dann ein Transformator am Netzanschlusspunkt, der im Falle eines Windparks als Parktransformator bezeichnet werden kann, zugeschaltet werden.

Zum weiteren Aufbau wird dann vorgeschlagen, eine Sollspannung hochzufahren. Das kann mit Hilfe eines Steuersignals einer zentralen Parksteuerungseinheit erfolgen.

Es kann dann, als Teil des Schwarzstartmodus eine Spannungs- und Frequenzhaltung durchgeführt werden.

Dazu regelt der Windpark Spannung und Frequenz des Windparks, also des Energieerzeugungsnetzes, und/oder des elektrischen Versorgungsnetzes. Letzteres besonders dann, wenn das elektrische Versorgungsnetz bereits wieder mit dem Energieerzeugungsnetz zum Leistungsaustausch verbunden wurde.

Dabei können Wirk- und Blindleistungssprünge in einer kurzen Anfangszeit, besonders in den ersten Millisekunden von den spannungsprägenden Windenergieanlagen oder Leistungsschränken bereitgestellt werden. Insoweit übernehmen diese spannungsprägenden Einheiten kurzzeitig diese Leistungssprünge. Die Leistungseinspeisung soll dann aber von schnell regelnden stromprägenden Einheiten, besonders Windenergieanlagen oder Leistungsschränken, übernommen werden. Diese stromprägenden Einheiten sind insoweit dazu vorbereitet, schnell Leistung bereitzustellen, bzw. einzuspeisen. Das kann durch eine Stromregelung erfolgen, in der ein Ist-Strom zurückgeführt und zum Ausregeln mit einem Strom-Sollwert verglichen wird.

Es kann dann ein Synchronisierungsmodus und/oder ein Modus eingesetzt werden, in dem eine Frequenzruhe geregelt wird. Bei einer Frequenzruhe steht im Vordergrund, dass sich die Frequenz im Energieerzeugungsnetz und/oder im elektrischen Versorgungsnetz nicht oder nur wenig ändert, während das Ausregeln auf einen absoluten Frequenzwert nicht im Vordergrund steht, und ausgesetzt sein kann.

Es wird gemäß einer Ausführungsform vorgeschlagen, für die spannungsprägenden Einheiten und die stromprägenden Einheiten unterschiedliche Regelungsverstärkungen für die Spannungsstützung zu verwenden. Solche Regelungsverstärkungen für die Spannungsstützung, bei denen besonders eine Blindleistung in Abhängigkeit einer Spannungsabweichung eingespeist wird, werden auch als Statik oder Droop bezeichnet. Durch die unterschiedlichen Regelungsverstärkungen, als unterschiedlichen Statiken bzw. unterschiedlichen Steilheit der Droops übernehmen spannungsprägende Einheiten, besonders spannungsprägende Umrichter nur einen sehr kleinen Teil einer zum Spannungsstützen einzuspeisenden Blindleistung im stationären Betrieb. Blindleistungssprünge werden dabei zwar von Spannungsprägemitteln, wie vom spannungsprägenden Umrichter, übernommen, dann aber schnell von Erstversorgungsmitteln, besonders von stromprägenden Umrichtern übernommen.

Auch frequenzabhängige Wirkleistungsregelungen, die auch als Wirkleistungsdroops bezeichnet werden, sollen so eingestellt werden, dass der Arbeitspunkt des spannungsprägenden Umrichters in Bezug auf seine eingespeiste Wirkleistung knapp über null ist, bei einer Frequenzabweichung die veränderte Wirkleistung also verhältnismäßig klein ist im Vergleich zu den stromprägenden Leistungsschränken. Bei Abruf positiver Wirkleistung übernimmt der spannungsprägende Umrichter zunächst und die stromprägenden Umrichter regeln dann schnell nach. Auch bei Abruf einer negativen Wirkleistung, wenn also eine Leistungsreduktion vorgenommen werden muss, übernimmt der spannungsprägende Umrichter zunächst und nimmt Wirkleistung auf. Ein schneller Verbraucher, insbesondere eine Chopper-Steuerung, kann diese Leistung dann vernichten. Im Falle einer Chopper-Steuerung wird durch das Choppern, also gepulstes Steuern, ein Strom in eine Widerstandseinheit, oder Widerstandsbank mit ohmschen Widerständen gesteuert, um dort die zu vernichtende elektrische Leistung in Wärme umzusetzen.

Es wurde besonders erkannt, dass Systemdienstleistungen aus Windenergieanlagen zwar hinreichend bekannt sind, diese bisher aber im Wesentlichen an die physikalischen Eigenschaften der früher dominierenden Einspeisetechnologie, nämlich Großkraftwerke mit Synchronmaschinen, angepasst waren.

Es wurde erkannt, dass kurz- und mittelfristig netzbetriebspunktabhängig diejenige Einspeisetechnologie, die in dem Moment dominiert, die Systemverantwortung übernehmen sollte. Das ist dann nämlich entweder eine konventionelle Einspeisetechnologie mit direkt gekoppelten Synchronmaschinen oder eine umrichterbasierte Einspeisetechnologie. Es wurde auch erkannt, dass eine einfache Nachbildung konventioneller und damit träger Erzeuger durch Umrichter nicht unbedingt zielführend ist. Diese Erkenntnis ist auch für einen Schwarzstart und einen intelligenten Netzwiederaufbau nach einem Schwarzfallen eines Netzes relevant.

Es wurden somit Steuerungs- und Regelungsstrategien für Windparks vorgeschlagen, um in einer Schwarzstartsituation den Schwarzstart durchzuführen und den Netzaufbau zu unterstützen, insbesondere intelligent zu unterstützen bzw. sogar im Vergleich zu einem Schwarzstart und Netzwiederaufbau bezogen auf konventionelle Einspeiser zu beschleunigen.

Besonders soll eine Erhöhung eines umrichterbasierten Erzeugungsanteils in elektrischen Versorgungsnetzen, besonders Verbundnetzen, erreicht werden. Dazu wurde ein Regelkonzept für Netze entwickelt, nämlich für Netze, die zeitweise fast vollständig durch umrichtergekoppelte oder umrichtergesteuerte Einspeisung erneuerbarer Energien betrieben werden kann, ohne Abstriche in der Systemsicherheit machen zu müssen.

Besonders eines oder mehrere der folgenden Ziele kann erreicht werden, nämlich:
- möglicher Schwarzstart mit regenerativen Kraftwerkskapazitäten
- beschleunigter Netzwiederaufbau mit regenerativen Kraftwerkskapazitäten
- Netzintegration eines zeitweise sehr hohen Anteils regenerativer Energien im Netz
- sicherer Netzbetrieb auch in Netzen, die zeitweise fast vollständig umrichterbasiert versorgt werden
- Übernahme von Systemverantwortung in der elektrischen Energieversorgung durch Windenergieanlagen
- Vermeiden einer angeblich technisch bedingten Obergrenze für regenerative Energien, besonders Windenergieanlagen in einem elektrischen Versorgungsnetz
- Substitution konventioneller Kraftwerke
- Erhöhung der Akzeptanz von regenerativen Einspeisern bei Netzbetreibern.

Der vorgeschlagenen Lösung liegt besonders der Gedanke zugrunde, die Schritte zum Schwarzstart in zwei funktionelle Gruppen zu gliedern.

Dies sind die beiden funktionalen Gruppen:
1. Kommunikation bei Stromausfall
2. Modus Schwarzstart für Einheiten, besonders Windenergieanlagen im Windpark und für eine zentrale Parksteuerungseinrichtung

Eine Möglichkeit des Ablaufs, besonders unter Berücksichtigung dieser zwei funktionalen Gruppen, ist in der Fig. 4 erläutert. Dort sind diese beiden funktionalen Gruppen ebenfalls mit der entsprechenden Nummer 1 bzw. 2 versehen.

Ein wichtiger Aspekt ist die Leistungsaufteilung zwischen spannungsprägenden und stromprägenden Einheiten, also insbesondere Umrichtern bzw. Leistungsschränken. Diese hat folgenden Zweck bzw. Hintergrund:
- Durch unterschiedliche Steilheit der Droops, also der Statiken, die in Fig. 6 gezeigt sind, übernimmt ein spannungsprägender Umrichter nur einen sehr kleinen Teil der Blindleistung, steuert also nur einen sehr kleinen Teil der insgesamt eingespeisten Blindleistung bei.
- Blindleistungssprünge werden zuerst vom spannungsprägenden Umrichter übernommen und dann schnell von den stromprägenden Umrichtern ausgeregelt.
- Auch für Wirkleistungs-Droops, also eine frequenzabhängige bzw. von Frequenzabweichungen abhängige Wirkleistungseinspeisung, werden vorzugsweise so eingestellt, dass der jeweilige Arbeitspunkt des spannungsprägenden Umrichters nur knapp über 0 ist, also so gewählt wird, dass nur wenig Wirkleistung eingespeist wird.
- Bei Abruf positiver Wirkleistung, wenn also Wirkleistung in das elektrische Versorgungsnetz eingespeist werden soll, übernimmt der spannungsprägende Umrichter zunächst die überschüssige Leistung und die stromprägenden Umrichter regeln dann schnell nach, sodass der spannungsprägende Umrichter nicht oder nur sehr kurzzeitig diese Aufgabe übernehmen muss. Der spannungsprägende Umrichter kann aber besonders auf Spannungsänderungen sehr viel schneller reagieren als die stromprägenden und übernimmt damit sofort einen solchen Abruf positiver Wirkleistung. Dabei ist zu beachten, dass sich besonders Wirkleistungsanforderungen zunächst in der Spannung, also in Spannungsänderungen des elektrischen Versorgungsnetzes bemerkbar machen. Das kann auch eine Phasenverschiebung bzw. dann eine Frequenzänderung der Spannung betreffen. Der eingespeiste Strom ändert sich dann erst in Reaktion darauf. Daher übernehmen die spannungsprägenden Umrichter zunächst solche Wirkleistungsabrufe oder Blindleistungssprünge, während die stromprägenden Umrichter dann schnell übernehmen und schnell nachregeln.
- Auch bei einem negativen Wirkleistungssprung, wenn die Wirkleistung also reduziert wird, übernimmt der spannungsprägende Umrichter und nimmt Wirkleistung auf. Hierzu wird vorgeschlagen, dass dann Chopper bzw. eine Chopper-Schaltung mit entsprechenden ohmschen Widerständen eine solche Leistung, um die nämlich reduziert wurde, in Wärme umwandeln, bis die stromprägenden Leistungsschränke, also die stromregelnden Umrichter, entsprechend nachgeregelt haben.

## Patentansprüche

1. Verfahren zum Starten eines Energieerzeugungsnetzes, nämlich eines Parknetzes (114, 730) eines Windparks (112), wobei das Energieerzeugungsnetz an wenigstens einem Netzanschlusspunkt an ein elektrisches Versorgungsnetz (120, 724, 806) angebunden ist, und wobei das Energieerzeugungsnetzes in einem Normalbetriebsmodus elektrische Leistung über den Netzanschlusspunkt mit dem elektrischen Versorgungsnetz (120, 724, 806) austauscht, umfassend die Schritte:
- Auswählen eines von dem Normalbetriebsmodus verschiedenen Aufbaumodus, wenn das elektrische Versorgungsnetz (120, 724, 806) einen Spannungsfall aufweist, und/oder das Energieerzeugungsnetz von dem elektrischen Versorgungsnetz (120, 724, 806) getrennt ist, und
- Betreiben des Energieerzeugungsnetzes in dem Aufbaumodus, wobei im Aufbaumodus
- wenigstens ein Spannungsprägemittel (808), nämlich eine spannungsprägende Windenergieanlage (100, 704), eine Energieerzeugungsnetzspannung, insbesondere Windparknetzspannung bereitstellt, wobei das wenigstens eine Spannungsprägemittel (808) zum Bereitstellen der Energieerzeugungsnetzspannung spannungsprägend arbeitet und
- wenigstens ein Erstversorgungsmittel (810), nämlich eine stromprägende Windenergieanlage (100, 704), sich mit der von dem Spannungsprägemittel (808) bereitgestellten Energieerzeugungsnetzspannung synchronisiert, wobei das wenigstens eine Erstversorgungsmittel (810) zum Bereitstellen einer elektrischen Leistung im Energieerzeugungsnetz stromprägend arbeitet und
- das Spannungsprägemittel (808) und das Erstversorgungsmittel (810) in Summe eine elektrische Leistung im Energieerzeugungsnetz in Höhe eines Eigenbedarfs des Energieerzeugungsnetzes bereitstellen., wobei
- das wenigstens eine Spannungsprägemittel (808) die Energieerzeugungsnetzspannung im Wesentlichen leistungslos bereitstellt, oder eine vom Betrag her deutlich kleinere Leistung einspeist, als das wenigstens eine Erstversorgungsmittel (810), vorzugsweise höchstens 20%, insbesondere höchstens 10% der Leistung des wenigstens einen Erstversorgungsmittels (810) bereitstellt, wobei.
- dem wenigstens einen Spannungsprägemittel (808) wenigstens eine erste Statik zu- grunde liegt und dem wenigstens einen Erstversorgungsmittel (810) wenigstens eine zweite Statik zugrunde liegt, wobei jede Statikjeweils einen Zusammenhang, besonders linearen Zusammenhang, zwischen einer elektrischen Spannung (u(t)) des Energieerzeugungsnetzes und einer einzuspeisenden oder eingespeisten Blindleistung(Q) oder zwischen einer Frequenz (f) des Energieerzeugungsnetzes und einer einzuspeisenden oder eingespeisten Wirkleistung beschreibt und,
**dadurch gekennzeichnet, dass**
die erste Statik eine kleinere Steigung als die zweite Statik aufweist.

2. Verfahren nach einem der vorstehenden Ansprüche, **dadurch gekennzeichnet, dass**
- dem wenigstens einen Spannungsprägemittel (808) eine erste Blindleistungsstatik zu-grunde liegt, die einen Zusammenhang zwischen einer durch das Spannungsprägemittel im Energieerzeugungsnetz bereitzustellenden elektrischen Spannung (u(t)) und einer durch das Spannungsprägemittel (808) eingespeisten Blindleistung (Q) beschreibt, und
- dem wenigstens einen Erstversorgungsmittel (810) eine zweite Blindleistungsstatik zugrunde liegt, die einen Zusammenhang zwischen einer im Energieerzeugungsnetz erfassten elektrischen Spannung (u(t)) und einer durch das Erstversorgungsmittel (810) einzuspeisenden Blindleistung (Q) beschreibt und
- die erste Blindleistungsstatik eine kleinere Steigung als die zweite Blindleistungsstatik aufweist, und/oder dass
- dem wenigstens einen Spannungsprägemittel (808) eine erste Wirkleistungsstatik zugrunde liegt, die einen Zusammenhang zwischen einer im Energieerzeugungsnetz durch das Spannungsprägemittel (808) bereitzustellenden Frequenz (f) und einer durch das Spannungsprägemittel (808) eingespeisten Wirkleistung beschreibt und,
- dem wenigstens einen Erstversorgungsmittel (810) eine zweite Wirkleistungsstatik zugrunde liegt, die einen Zusammenhang zwischen einer im Energieerzeugungsnetz erfassten Frequenz (f) und einer durch das Erstversorgungsmittel (810) einzuspeisenden Wirkleistung beschreibt und
- die erste Wirkleistungsstatik eine kleinere Steigung als die zweite Wirkleistungsstatik aufweist.

3. Verfahren nach Anspruch 2, **dadurch gekennzeichnet, dass**
- das wenigstens eine Spannungsprägemittel (808) die bereitzustellende elektrische Spannung(u(t)) jeweils in Abhängigkeit der eingespeisten Blindleistung (Q) gemäß der ersten Blindleistungsstatik bereitstellt, und
- das wenigstens eine Erstversorgungsmittel (810) die einzuspeisende Blindleistung (Q) jeweils in Abhängigkeit der erfassten elektrischen Spannung (u(t)) gemäß der zweiten Blindleistungsstatik einspeist und/oder
- das wenigstens eine Spannungsprägemittel (808) die bereitzustellende Frequenz (f) jeweils in Abhängigkeit der eingespeisten Wirkleistung gemäß der ersten Wirkleistungsstatik bereitstellt und,
- das wenigstens eine Erstversorgungsmittel (810) die einzuspeisende Wirkleistung jeweils in Abhängigkeit der erfassten Frequenz (f) gemäß der zweiten Wirkleistungsstatik einspeist.

4. Verfahren nach einem der vorstehenden Ansprüche 1 bis 3, **dadurch gekennzeichnet, dass** die Steigung bzw. Verstärkung der zweiten Statik, zweiten Blindleistungsstatik und/oder der zweiten Wirkleistungsstatik wenigstens doppelt so groß, insbesondere wenigstens dreimal so groß wie die Steigung bzw. Verstärkung der entsprechenden ersten Statik, Blindleistungsstatik bzw. Wirkleistungsstatik ist.

5. Verfahren nach einem der vorstehenden Ansprüche, **dadurch gekennzeichnet, dass**
- das Auswählen des Aufbaumodus, insbesondere ein Wechseln von dem Normalbetriebsmodus in den Aufbaumodus, erfolgt, wenn alternativ oder zusätzlich das Energieerzeugungsnetz einen Spannungsfall aufweist.

6. Verfahren nach einem der vorstehenden Ansprüche, **dadurch gekennzeichnet, dass**
- das Betreiben des Energieerzeugungsnetzes in dem Aufbaumodus erst erfolgt, wenn das Energieerzeugungsnetz spannungslos ist.

7. Verfahren nach einem der vorstehenden Ansprüche, **dadurch gekennzeichnet, dass**
- das wenigstens eine Erstversorgungsmittel (810) bzw. die weiteren Erstversorgungsmittel (810) zum Bereitstellen der elektrischen Leistung im Energieerzeugungsnetz kaskadiert synchronisiert werden.

8. Verfahren nach einem der vorstehenden Ansprüche, **dadurch gekennzeichnet, dass**
- die von dem wenigstens einen Erstversorgungsmittel (810) bereitgestellte elektrische Leistung im Energieerzeugungsnetz wenigstens einen Blindleistungsanteil aufweist, der genügend groß ist, um den Blindleistungsbedarf des Energieerzeugungsnetzes zu decken.

9. Verfahren nach einem der vorstehenden Ansprüche, **dadurch gekennzeichnet, dass**
- die von dem wenigstens einen Erstversorgungsmittel (810) bereitgestellte elektrische Leistung im Energieerzeugungsnetz wenigstens einen Blindleistungsanteil und einen Wirkleistungsanteil aufweist, wobei der Blindleistungsanteil größer als der Wirkleistungsanteil ist, bevorzugt wenigstens doppelt so groß, besonders bevorzugt wenigstens fünfmal so groß.

10. Verfahren nach einem der vorstehenden Ansprüche, **dadurch gekennzeichnet, dass**
- das elektrische Versorgungsnetz (120, 724, 806) eine Versorgungsspannung aufweist und die Energieerzeugungsnetzspannung auf die Versorgungsnetzspannung hochgefahren wird, um das Energieerzeugungsnetz mit dem elektrischen Versorgungsnetz (120, 724, 806) zu synchronisieren.

11. Verfahren nach einem der vorstehenden Ansprüche, ferner umfassend den Schritt:
- Zuschalten des Energieerzeugungsnetzes auf das elektrische Versorgungsnetz (120, 724, 806) über einen Energieerzeugungsnetztransformator, insbesondere Windparktransformator (722), wenn das Energieerzeugungsnetz eine mit dem elektrischen Versorgungsnetz (120, 724, 806) synchronisierte Energieerzeugungsnetzspannung aufweist oder um eine Netzwiederaufbauspannung am Netzanschlusspunkt bereitzustellen, wenn das elektrische Versorgungsnetz (120, 724, 806) keine Spannung (u(t)) aufweist.

12. Verfahren nach einem der vorstehenden Ansprüche, ferner umfassend den Schritt:
- Herunterfahren des wenigstens einen Spannungsprägemittels (808) und des wenigstens einen Erstversorgungsmittels (810) so, dass das Energieerzeugungsnetz spannungslos ist, wenn das elektrische Versorgungsnetz (120, 724, 806) einen Spannungsfall aufweist.

13. Verfahren nach einem der vorstehenden Ansprüche, **dadurch gekennzeichnet, dass**
- das wenigstens eine Spannungsprägemittel (808) eine Energieerzeugungsnetzspannung erst dann bereitstellt, wenn das Energieerzeugungsnetz spannungslos ist.

14. Verfahren nach einem der vorstehenden Ansprüche, **dadurch gekennzeichnet, dass**
- der Spannungsfall in Bezug auf eine Nennspannung des elektrischen Versorgungsnetzes (120, 724, 806) definiert ist als:
- eine Spannung (u(t)), die kleiner ist als 90 Prozent der Nennspannung oder
- eine Spannung (u(t)), die kleiner ist als 70 Prozent der Nennspannung oder
- eine Spannung (u(t)), die kleiner ist als 30 Prozent der Nennspannung oder
- eine Spannung (u(t)), die kleiner ist als 10 Prozent der Nennspannung.

15. Verfahren nach einem der vorstehenden Ansprüche, **dadurch gekennzeichnet, dass**
- das wenigstens eine Spannungsprägemittel (808) zum Bereitstellen der Energieerzeugungsnetzspannung einen aus einer Kapazität gespeisten Gleichspannungszwischenkreis (710) aufweist, wobei die Kapazität dazu eingerichtet ist, den Gleichspannungszwischenkreis (710) im Falle eines Spannungsfalles im elektrischen Versorgungsnetz (120, 724, 806) und/oder im Falle eines spannungslosen Energieerzeugungsnetzes so mit einer Gleichspannung zu versorgen, dass das wenigstens eine Spannungsprägemittel (808) eine stabile Energieerzeugungsnetzspannung bereitstellen kann.

16. Verfahren nach einem der vorstehenden Ansprüche, ferner umfassend den Schritt:
- Erfassen eines Spannungsfalles im elektrischen Versorgungsnetz (120, 724, 806) und/oder Feststellen einer Spannungslosigkeit im Energieerzeugungsnetz durch eine Spannungserfassung des wenigstens einen Spannungsprägemittels (808).

17. Verfahren nach einem der vorstehenden Ansprüche, **dadurch gekennzeichnet, dass**
- das Energieerzeugungsnetz eine Leistungssteuerung umfasst, mittels der das wenigstens eine Erstversorgungsmittel (810) eine elektrische Leistung in Abhängigkeit eines Leistungssollwertes (Pₛₒₗₗ) in das elektrische Versorgungsnetz (120, 724, 806) einspeist, wobei bevorzugt ein Leistungssollwert (Pₛₒₗₗ) von einem Energieerzeugungsnetzbetreiber oder von einem Netzbetreiber des elektrischen Versorgungsnetzes (120, 724, 806) vorgegeben wird, und/oder die elektrische Leistung so erhöht wird, dass sie bei einer Regelabweichung langsam nachgeführt wird, insbesondere über einen I-Regler.

18. Verfahren nach einem der vorstehenden Ansprüche, **dadurch gekennzeichnet, dass**
- das Energieerzeugungsnetz eine Frequenzhaltung aufweist,
- die einen Teil der verfügbaren elektrischen Leistung des wenigstens einen Erstversorgungsmittels (810) zurückhält, um diesen bei Bedarf zur Frequenzhaltung des elektrischen Versorgungsnetzes (120, 724, 806) freizugeben, insbesondere einzuspeisen und/oder
- die ein Einspeisen elektrischer Leistung des wenigstens einen Erstversorgungsmittels (810) begrenzt, wenn das Energieerzeugungsnetz und/oder das elektrische Versorgungsnetz (120, 724, 806) eine Netzfrequenz aufweist, die eine Überfrequenz darstellt, und/oder
- die elektrische Leistung aus dem elektrischen Versorgungsnetz (120, 724, 806) entnimmt und vorzugsweise durch eine Chopper-Vorrichtung verbraucht.

19. Verfahren nach einem der vorstehenden Ansprüche, **dadurch gekennzeichnet, dass**
- das Energieerzeugungsnetz dazu eingerichtet ist, eine Wetterprognose zu empfangen und/oder eine Wetterprognose zu erstellen, wobei die Wetterprognose dazu verwendet wird, einen Zeitpunkt festzulegen, an dem das Betreiben des Energieerzeugungsnetzes in dem Aufbaumodus gestartet werden kann.

20. Verfahren nach einem der vorstehenden Ansprüche, **dadurch gekennzeichnet, dass** das Spannungsprägemittel (808) und das Erstversorgungsmittel (810) jeweils eine Einspeiseeinheit bilden und durch eine Ansteuerung als Spannungsprägemittel (808) bzw. Erstversorgungsmittel (810) arbeiten, wobei insbesondere das Spannungsprägemittel (808) durch entsprechende Änderung der Ansteuerung als Erstversorgungsmittel (810) und das Erstversorgungsmittel (810) durch Änderung der Ansteuerung als Spannungsprägemittel (808) arbeiten kann.

21. Windenergieanlage (100, 704) umfassend eine Steuerungseinheit und einen Umrichter, der dazu eingerichtet ist, spannungsprägend und/oder stromprägend zu arbeiteten, wobei die Steuerungseinheit den Umrichter so ansteuert, dass die Windenergieanlage (100, 704) dazu eingerichtet ist, als Spannungsprägemittel (808) oder als Erstversorgungsmittel (810) in einem Verfahren nach einem der Ansprüche 1 bis 20 verwendet zu werden.

22. Windenergieanlage (100, 704) nach Anspruch 21, **gekennzeichnet durch** eine Chopper-Vorrichtung zum Verbrauchen elektrischer Leistung aus dem Energieerzeugungsnetz zum Unterstützen einer Frequenzstützung.

23. Windpark (112, 500, 700) umfassend wenigstens eine erste und eine zweite Windenergieanlage (100, 704), wobei die erste Windenergieanlage (100, 704) spannungsprägend und die zweite Windenergieanlage (100, 704) stromprägend arbeiten kann, oder wobei wenigstens ein erster Wechselrichter (812) vorgesehen ist, der spannungsprägend arbeiten kann, und wenigstens ein zweiter Wechselrichter (822) vorgesehen ist, der stromprägend arbeiten kann, um in beiden Fällen ein Verfahren nach einem der Ansprüche 1 bis 20 auszuführen.

24. Windpark (112, 500, 700) nach Anspruch 23, **dadurch gekennzeichnet, dass** die erste und/oder die zweite Windenergieanlage (100, 704) eine Windenergieanlage (100, 704) nach Anspruch 22 ist.

25. Windpark (112, 500, 700) nach Anspruch 23 oder 24, **dadurch gekennzeichnet, dass** wenigstens ein erster bzw. der wenigstens eine erste Wechselrichter (812), der spannungsprägend arbeiten kann, und wenigstens ein zweiter bzw. der wenigstens eine zweite Wechselrichter, der stromprägend (822) arbeiten kann, zusammen mit einer Energiespeichereinheit, insbesondere einem Batteriespeicher, gekoppelt sind und zusammen eine Schwarzstarteinheit bilden und dazu vorbereitet sind, zum Betreiben des Energieerzeugungsnetzes in dem Aufbaumodus verwendet zu werden, insbesondere so, dass die Energiespeichereinheit dem wenigstens einen ersten und dem wenigstens einen zweiten Wechselrichter zum Betreiben des Aufbaumodus nötige Energie bereitstellt.

## Claims

1. A method for starting an energy generation grid, in particular a farm grid (114, 730) of a wind farm (112), wherein the energy generation grid has at least one grid connection point connected to an electrical supply grid (120, 724, 806), and wherein the energy generation grid, in a normal operating mode, exchanges electrical power with the electrical supply grid (120, 724, 806) via the grid connection point, comprising the steps of:
- selecting an establishment mode, which is different than the normal operating mode, if the electrical supply grid (120, 724, 806) has a voltage drop, and/or the energy generation grid is isolated from the electrical supply grid (120, 724, 806), and
- operating the energy generation grid in the establishment mode, wherein in the establishment mode
- at least one voltage influencing means (808), in particular a voltage influencing wind power installation (100, 704), an energy generation grid voltage, in particular a wind farm grid voltage, is provided, wherein the at least one voltage influencing means (808) operates in a voltage influencing manner to provide the energy generation grid voltage and
- at least one initial supply means (810), namely a current influencing wind power installation (100, 704), synchronizes to the energy generation grid voltage provided via the voltage influencing means, wherein the at least one initial supply means (808) operates in a current influencing manner to provide an electrical power in the energy generation grid and
- the voltage influencing means (808) and the initial supply means (810) in total provide an electrical power in the energy generation grid at the level of an inherent need of the energy generation grid, wherein
- the at least one voltage influencing means (808) provides the energy generation grid voltage substantially without power, or supplies a power having a distinctly lower absolute value than the at least one initial supply means (810), preferably provides no more than 20%, in particular no more than 10%, of the power of the at least one initial supply means (810).
- the at least one voltage influencing means (808) is based on at least one first droop and the at least one initial supply means (810) is based on at least one second droop, wherein each droop describes a respective relationship, particularly a linear relationship, between a voltage (u(t)) of the energy generation grid and a reactive power (Q) that is to be supplied or that has been supplied or between a frequency (f) of the energy generation grid and a real power that is to be supplied or has been supplied, and
charactertized in that, that
the first droop has a smaller gradient than the second droop.

2. The method as claimed in one of the preceding claims, **characterized in that**
- the at least one voltage influencing means (808) is based on a first reactive power droop describing a relationship between a voltage to be provided by the voltage influencing means in the energy generation grid and a reactive power (Q) supplied by the voltage influencing means (808), and
- the at least one initial supply means (810) is based on a second reactive power droop describing a relationship between a voltage (u(t)) recorded in the energy generation grid and a reactive power (Q) to be supplied by the initial supply means (10), and
- the first reactive power droop has a smaller gradient than the second reactive power droop, and/or **in that**
- the at least one voltage influencing means (808) is based on a first real power droop describing a relationship between a frequency (f) to be provided in the energy generation grid by the voltage influencing means (808) and a real power supplied by the voltage influencing means (808), and
- the at least one initial supply means (808) is based on a second real power droop describing a relationship between a frequency (f) recorded in the energy generation grid and a real power to be supplied by the initial supply means (810), and
- the first real power droop has a smaller gradient than the second real power droop.

3. The method as claimed in claim 2, **characterized in that**
- the at least one voltage influencing means (808) provides the voltage (u(t)) that is to be provided on the basis of the supplied reactive power (Q) in each case according to the first reactive power droop, and
- the at least one initial supply means supplies (810) the reactive power (Q) that is to be supplied on the basis of the recorded voltage (u(t)) in each case according to the second reactive power droop and/or
- the at least one voltage influencing means (808) provides the frequency (f) that is to be provided on the basis of the supplied real power in each case according to the first real power droop, and
- the at least one initial supply means (810) supplies the real power that is to be supplied on the basis of the recorded frequency (f) in each case according to the second real power droop.

4. The method as claimed in one of preceding claims 1 to 3, **characterized in that** the gradient or gain of the second droop, second reactive power droop and/or second real power droop is at least twice as great, in particular at least three times as great, as the gradient or gain of the corresponding first droop, reactive power droop and real power droop respectively.

5. The method as claimed in one of the preceding claims, **characterized in that**
- the selecting of the establishment mode, in particular changing from the normal operating mode to the establishment mode, is effected if alternatively or additionally the energy generation grid has a voltage drop.

6. The method as claimed in one of the preceding claims, **characterized in that**
- the operating of the energy generation grid in the establishment mode is effected only when the energy generation grid is de-energized.

7. The method as claimed in one of the preceding claims, **characterized in that**
- the at least one initial supply means (810) and the further initial supply means (810) are synchronized in cascaded fashion to provide the electrical power in the energy generation grid.

8. The method as claimed in one of the preceding claims, **characterized in that**
- the electrical power provided by the at least one initial supply means (810) in the energy generation grid has at least one reactive power component that is sufficiently large to cover the reactive power requirement of the energy generation grid.

9. The method as claimed in one of the preceding claims, **characterized in that**
- the electrical power provided by the at least one initial supply means (810) in the energy generation grid has at least one reactive power component and one real power component, wherein the reactive power component is greater than the real power component, preferably at least twice as great, particularly preferably at least five times as great.

10. The method as claimed in one of the preceding claims, **characterized in that**
- the electrical supply grid (120, 724, 806) has a supply voltage and the energy generation grid voltage is ramped up to the supply grid voltage in order to synchronize the energy generation grid to the electrical supply grid (120, 724, 806).

11. The method as claimed in one of the preceding claims, further comprising the step of:
- connecting the energy generation grid to the electrical supply grid (120, 724, 806) via an energy generation grid transformer, in particular a wind farm transformer (722), if the energy generation grid has an energy generation grid voltage synchronized to the electrical supply grid (120, 724, 806) or in order to provide a grid reestablishment voltage at the grid connection point if the electrical supply grid (120, 724, 806) has no voltage (u(t)).

12. The method as claimed in one of the preceding claims, further comprising the step of:
- ramping down the at least one voltage influencing means (808) and the at least one initial supply means (810) such that the energy generation grid is de-energized if the electrical supply grid (120, 724, 806) has a voltage drop.

13. The method as claimed in one of the preceding claims, **characterized in that**
- the at least one voltage influencing means (808) provides an energy generation grid voltage only when the energy generation grid is de-energized.

14. The method as claimed in one of the preceding claims, **characterized in that**
- the voltage drop is defined in relation to a rated voltage of the electrical supply grid (120, 724, 806) as:
- a voltage (u(t)) less than 90 percent of the rated voltage or
- a voltage (u(t)) less than 70 percent of the rated voltage or
- a voltage (u(t)) less than 30 percent of the rated voltage or
- a voltage (u(t)) less than 10 percent of the rated voltage.

15. The method as claimed in one of the preceding claims, **characterized in that**
- the at least one voltage influencing means (808) has a DC link circuit fed from a capacitance to provide the energy generation grid voltage (710), wherein the capacitance is configured to supply the DC link circuit (710) with a DC voltage in the event of a voltage drop in the electrical supply grid(120, 724, 806) and/or in the event of a de-energized energy generation grid such that the at least one voltage influencing means (808) can provide a stable energy generation grid voltage.

16. The method as claimed in one of the preceding claims, further comprising the step of:
- recording a voltage drop in the electrical supply grid (120, 724, 806) and/or detecting a loss of voltage in the energy generation grid by means of a voltage recording of the at least one voltage influencing means (808).

17. The method as claimed in one of the preceding claims, **characterized in that**
- the energy generation grid comprises a power controller by means of which the at least one initial supply means supplies (810) an electrical power to the electrical supply grid (120, 724, 806) on the basis of a power setpoint value (Pₛₒₗₗ) wherein preferably a power setpoint value (Pₛₒₗₗ) is prescribed by an energy generation grid operator or by a grid operator of the electrical supply grid (120, 724, 806), and/or the electrical power is increased such that in the event of a system deviation it is slowly corrected, in particular by means of an I controller.

18. The method as claimed in one of the preceding claims, **characterized in that**
- the energy generation grid has a frequency stability
- that holds back a portion of the available electrical power of the at least one initial supply means (810) in order to release it, in particular supply it, for the frequency stability of the electrical supply grid (120, 724, 806) when required and/or
- that limits a supply of electrical power of the at least one initial supply means (810) if the energy generation grid and/or the electrical supply grid (120, 724, 806) has a grid frequency that is an overfrequency, and/or
- that draws electrical power from the electrical supply grid (120, 724, 806) and preferably consumes it by means of a chopper apparatus.

19. The method as claimed in one of the preceding claims, **characterized in that**
- the energy generation grid is configured to receive a weather forecast and/or to produce a weather forecast, wherein the weather forecast is used to stipulate a time at which operation of the energy generation grid in the establishment mode can be started.

20. The method as claimed in one of the preceding claims, **characterized in that** the voltage influencing means (808) and the initial supply means (810) each form a supply unit and operate as voltage influencing means (808) or initial supply means (810) by means of actuation, wherein in particular the voltage influencing means (808) can operate as initial supply means (810) by virtue of an appropriate change of actuation and the initial supply means (810) can operate as voltage influencing means (808) by virtue of a change of actuation.

21. A wind power installation (100, 704) comprising a control unit and a converter configured to operate in voltage-influencing and/or current-influencing fashion, wherein the control unit actuates the converter such that the wind power installation (100, 704) is configured to be used as voltage influencing means or as initial supply means in a method as claimed in one of claims 1 to 20.

22. The wind power installation (100, 704) as claimed in claim 21, **characterized by** a chopper apparatus for consuming electrical power from the energy generation grid to support frequency backup control.

23. A wind farm (112, 500, 700) comprising at least one first and one second wind power installation (100, 704), wherein the first wind power installation (100, 704) can operate in voltage-influencing fashion and the second wind power installation can operate in current-influencing fashion, or wherein there is provision for at least one first inverter (812), which can operate in voltage-influencing fashion, and there is provision for at least one second inverter (822), which can operate in current-influencing fashion, in order to carry out a method as claimed in one of claims 1 to 20 in both cases.

24. The wind farm (112, 500, 700) as claimed in claim 23, **characterized in that** the first and/or the second wind power installation (100, 704) is a wind power installation (100, 704) as claimed in claim 22.

25. The wind farm (112, 500, 700) as claimed in claim 23 or 24, **characterized in that** at least one first or the at least one first inverter (812), which can operate in voltage-influencing fashion, and at least one second or the at least one second inverter (822), which can operate in current-influencing fashion, are together coupled to an energy storage unit, in particular a battery store, and together form a black starting unit and are prepared to be used to operate the energy generation grid in the establishment mode, in particular such that the energy storage unit provides the at least one first and the at least one second inverter with energy needed to operate the establishment mode.

## Revendications

1. Procédé de démarrage d'un réseau de production d'énergie, à savoir d'un réseau de parc (114, 730) d'un parc éolien (112), dans lequel le réseau de production d'énergie est raccordé à un réseau d'alimentation électrique (120, 724, 806) sur au point de branchement au réseau, et dans lequel le réseau de production d'énergie échange une puissance électrique par le point de branchement au réseau avec le réseau d'alimentation électrique (120, 724, 806) dans un mode de fonctionnement normal, comprenant les étapes :
- sélection d'un mode d'établissement différent du mode de fonctionnement normal lorsque le réseau d'alimentation électrique (120, 724, 806) présente une chute de tension, et/ou le réseau de production d'énergie est déconnecté du réseau d'alimentation électrique (120, 724, 806), et
- de fonctionnement du réseau de production d'énergie dans le mode d'établissement, dans lequel dans le mode d'établissement
- au moins un moyen de formation de tension (808), à savoir une éolienne (100, 704) de formation de tension, fournit une tension de réseau de production d'énergie, en particulier une tension de réseau de parc éolien, dans lequel l'au moins un moyen de formation de tension (808) fonctionne en formant une tension pour fournir la tension de réseau de production d'énergie et
- au moins un moyen d'alimentation primaire (810), à savoir une éolienne (100, 704) de formation du courant, se synchronise avec la tension de réseau de production d'énergie fournie par le moyen de formation de tension (808), dans lequel l'au moins un moyen d'alimentation primaire (810) fonctionne en formant un courant pour fournir une puissance électrique dans le réseau de production d'énergie et
- le moyen de formation de tension (808) et le moyen d'alimentation primaire (810) fournissent en somme une puissance électrique dans le réseau de production d'énergie à hauteur d'un besoin propre du réseau de production d'énergie, dans lequel
- l'au moins un moyen de formation de tension (808) fournit la tension de réseau de production d'énergie sensiblement sans puissance, ou injecte une puissance nettement inférieure en termes de valeur à celle fournie par l'au moins un moyen d'alimentation primaire (810), de préférence au maximum de 20 %, en particulier au maximum de 10 % de la puissance de l'au moins un moyen d'alimentation primaire (810), dans lequel
- au moins une première statique est sous-jacente à l'au moins un moyen de formation de tension (808) et au moins une deuxième statique est sous-jacente à l'au moins un moyen d'alimentation primaire (810), dans lequel chaque statique décrit respectivement un lien, en particulier un lien linéaire, entre une tension électrique (u(t)) du réseau de production d'énergie et une puissance réactive (Q) à injecter ou injectée ou entre une fréquence (f) du réseau de production d'énergie et une puissance active à injecter ou injectée et,
**caractérisé en ce que**
la première statique présente une pente inférieure à la deuxième statique.

2. Procédé selon la revendication précédente, **caractérisé en ce que**
- une première statique de puissance réactive, qui décrit un lien entre une tension électrique (u(t)) à fournir par le moyen de formation de tension dans le réseau de production d'énergie et une puissance réactive (Q) injectée par le moyen de formation de tension (808), est sous-jacente à l'au moins un premier moyen de formation de tension (808), et
- une deuxième statique de puissance réactive, qui décrit un lien entre une tension électrique (u(t)) détectée dans le réseau de production d'énergie et une puissance réactive (Q) à injecter par le moyen d'alimentation primaire (810), est sous-jacente à l'au moins un moyen d'alimentation primaire (810) et
- la première statique de puissance réactive présente une pente inférieure à la deuxième statique de puissance réactive, et/ou que
- une première statique de puissance active, qui décrit un lien entre une fréquence (f) à fournir dans le réseau de production d'énergie par le moyen de formation de tension (808) et une puissance active injectée par le moyen de formation de tension (808), est sous-jacente à l'au moins un moyen de formation de tension (808) et,
- une deuxième statique de puissance active, qui décrit un lien entre une fréquence (f) détectée dans le réseau de production d'énergie et une puissance active à injecter par le moyen d'alimentation primaire (810), est sous-jacente à l'au moins un moyen d'alimentation primaire (810) et
- la première statique de puissance active présente une pente inférieure à celle de la deuxième statique de puissance active.

3. Procédé selon la revendication 2, **caractérisé en ce que**
- l'au moins un moyen de formation de tension (808) fournit la tension électrique (u(t)) à fournir respectivement en fonction de la puissance réactive (Q) injectée selon la première statique de puissance réactive, et
- l'au moins un moyen d'alimentation primaire (810) injecte la puissance réactive (Q) à injecter respectivement en fonction de la tension électrique (u(t)) détectée selon la deuxième statique de puissance réactive et/ou
- l'au moins un moyen de formation de tension (808) fournit la fréquence (f) à fournir respectivement en fonction de la puissance active injectée selon la première statique de puissance active et,
- l'au moins un moyen d'alimentation primaire (810) injecte la puissance active à alimenter en fonction de la fréquence (f) détectée selon la deuxième statique de puissance active.

4. Procédé selon l'une quelconque des revendications 1 à 3 précédentes, **caractérisé en ce que** la pente ou l'amplification de la deuxième statique, de la deuxième statique de puissance réactive et/ou de la deuxième statique de puissance active est au moins deux fois plus grande, en particulier au moins trois fois plus grande, que la pente ou l'amplification de la première statique, de la statique de puissance réactive ou de la statique de puissance active correspondante.

5. Procédé selon l'une quelconque des revendications précédentes, **caractérisé en ce que**
- la sélection du mode d'établissement, en particulier un passage du mode de fonctionnement normal dans le mode d'établissement, est effectuée lorsque, alternativement ou en complément, le réseau de production d'énergie présente une chute de tension.

6. Procédé selon l'une quelconque des revendications précédentes, **caractérisé en ce que**
- le fonctionnement du réseau de production d'énergie dans le mode d'établissement n'est effectué que lorsque le réseau de production d'énergie est hors tension.

7. Procédé selon l'une quelconque des revendications précédentes, **caractérisé en ce que**
- l'au moins un moyen d'alimentation primaire (810) ou les autres moyens d'alimentation primaire (810) sont synchronisés en cascade pour la fourniture de la puissance électrique dans le réseau de production d'énergie.

8. Procédé selon l'une quelconque des revendications précédentes, **caractérisé en ce que**
- la puissance électrique fournie par l'au moins un moyen d'alimentation primaire (810) dans le réseau de production d'énergie présente au moins une part de puissance réactive qui est suffisamment importante pour couvrir le besoin en puissance réactive du réseau de production d'énergie.

9. Procédé selon l'une quelconque des revendications précédentes, **caractérisé en ce que**
- la puissance électrique fournie par l'au moins un moyen d'alimentation primaire (810) dans le réseau de production d'énergie présente au moins une part de puissance réactive et une part de puissance active, dans lequel la part de puissance réactive est supérieure à la part de puissance active, de manière préférée est au moins deux fois plus grande, de manière particulièrement préférée est au moins cinq fois plus grande.

10. Procédé selon l'une quelconque des revendications précédentes, **caractérisé en ce que**
- le réseau d'alimentation électrique (120, 724, 806) présente une tension d'alimentation et la tension du réseau de production d'énergie est augmentée à la tension du réseau d'alimentation pour synchroniser le réseau de production d'énergie avec le réseau d'alimentation électrique (120, 724, 806).

11. Procédé selon l'une quelconque des revendications précédentes, comprenant en outre l'étape :
- de connexion du réseau de production d'énergie au réseau d'alimentation électrique (120, 724, 806) par l'intermédiaire d'un transformateur de réseau de production d'énergie, en particulier un transformateur de parc éolien (722), lorsque le réseau de production d'énergie présente une tension de réseau de production d'énergie synchronisée avec le réseau d'alimentation électrique (120, 724, 806) ou pour fournir une tension de rétablissement de réseau sur le point de branchement au réseau lorsque le réseau d'alimentation électrique (120, 724, 806) ne présente pas de tension (u(t)).

12. Procédé selon l'une quelconque des revendications précédentes, comprenant en outre l'étape :
- d'arrêt de l'au moins un moyen de formation de tension (808) et de l'au moins un moyen d'alimentation primaire (810) de telle sorte que le réseau de production d'énergie est hors tension lorsque le réseau d'alimentation électrique (120, 724, 806) présente une chute de tension.

13. Procédé selon l'une quelconque des revendications précédentes, **caractérisé en ce que**
- l'au moins un moyen de formation de tension (808) ne fournit une tension de réseau de production d'énergie que lorsque le réseau de production d'énergie est hors tension.

14. Procédé selon l'une quelconque des revendications précédentes, **caractérisé en ce que**
- la chute de tension par rapport à une tension nominale du réseau d'alimentation électrique (120, 724, 806) est définie comme :
- une tension (u(t)) qui est inférieure à 90 % de la tension nominale ou
- une tension (u(t)) qui est inférieure à 70 % de la tension nominale ou
- une tension (u(t)) qui est inférieure à 30 % de la tension nominale ou
- une tension (u(t)) qui est inférieure à 10 % de la tension nominale.

15. Procédé selon l'une quelconque des revendications précédentes, **caractérisé en ce que**
- l'au moins un moyen de formation de tension (808) présente, pour fournir la tension de réseau de production d'énergie, un circuit intermédiaire (710) de tension continue alimenté par une capacité, dans lequel la capacité est configurée pour alimenter le circuit intermédiaire (710) de tension continue en tension continue dans le cas d'une chute de tension dans le réseau d'alimentation électrique (120, 724, 806) et/ou dans le cas d'un réseau de production d'énergie hors tension de telle sorte que l'au moins un moyen de formation de tension (808) peut fournir une tension de réseau de production d'énergie stable.

16. Procédé selon l'une quelconque des revendications précédentes, comprenant en outre l'étape :
- de détection d'une chute de tension dans le réseau d'alimentation électrique (120, 724, 806) et/ou la constatation d'une absence de tension dans le réseau de production d'énergie par une détection de tension de l'au moins un moyen de formation de tension (808).

17. Procédé selon l'une quelconque des revendications précédentes, **caractérisé en ce que**
- le réseau de production d'énergie comprend une commande de puissance au moyen de laquelle l'au moins un moyen d'alimentation primaire (810) injecte une puissance électrique en fonction d'une valeur de consigne de puissance (P_{théorique}) dans le réseau d'alimentation électrique (120, 724, 806), dans lequel une valeur de consigne de puissance (P_{théorique}) est spécifiée de manière préférée par un opérateur de réseau de production d'énergie ou par un opérateur de réseau du réseau d'alimentation électrique (120, 724, 806), et/ou la puissance électrique est augmentée de telle sorte que, en cas d'écart de régulation, elle est suivie lentement, en particulier par un régulateur I.

18. Procédé selon l'une quelconque des revendications précédentes, **caractérisé en ce que**
- le réseau de production d'énergie présente un maintien de fréquence,
- qui retient une partie de la puissance électrique disponible de l'au moins un moyen d'alimentation primaire (810) pour la libérer, en particulier l'injecter, en cas de besoin pour le maintien de fréquence du réseau d'alimentation électrique (120, 724, 806), et/ou
- qui limite une injection de puissance électrique de l'au moins un moyen d'alimentation primaire (810) lorsque le réseau de production d'énergie et/ou le réseau d'alimentation électrique (120, 724, 806) présente(nt) une fréquence de réseau qui représente une surfréquence, et/ou
- qui prélève de la puissance électrique provenant du réseau d'alimentation électrique (120, 724, 806) et la consomme de préférence par un dispositif hacheur.

19. Procédé selon l'une quelconque des revendications précédentes, **caractérisé en ce que**
- le réseau de production d'énergie est configuré pour recevoir une prévision météorologique et/ou établir une prévision météorologique, dans lequel la prévision météorologique est utilisée pour définir un moment auquel le fonctionnement du réseau de production d'énergie peut être démarré dans le mode d'établissement.

20. Procédé selon l'une quelconque des revendications précédentes, **caractérisé en ce que**
le moyen de formation de tension (808) et le moyen d'alimentation primaire (810) forment respectivement une unité d'injection et fonctionnent par un pilotage comme moyen de formation de tension (808) ou moyen d'alimentation primaire (810), dans lequel en particulier le moyen de formation de tension (808) peut fonctionner par modification correspondante du pilotage comme moyen d'alimentation primaire (810) et le moyen d'alimentation primaire (810) par modification du pilotage comme moyen de formation de tension (808).

21. Éolienne (100, 704) comprenant une unité de commande et un convertisseur qui est configuré pour fonctionner en formant une tension et/ou en formant un courant, dans laquelle l'unité de commande pilote le convertisseur de telle sorte que l'éolienne (100, 704) est configurée pour être utilisée comme moyen de formation de tension (808) ou comme moyen d'alimentation primaire (810) dans un procédé selon l'une quelconque des revendications 1 à 20.

22. Éolienne (100, 704) selon la revendication 21, **caractérisée par** un dispositif hacheur pour consommer de la puissance électrique provenant du réseau de production d'énergie pour soutenir un soutien de fréquence.

23. Parc éolien (112, 500, 700) comprenant au moins une première et une deuxième éolienne (100, 704), dans lequel la première éolienne (100, 704) peut fonctionner en formant une tension et la deuxième éolienne (100, 704) en formant un courant, ou dans lequel au moins un premier onduleur (812) est prévu, qui peut fonctionner en formant une tension, et au moins un deuxième onduleur (822) est prévu, qui peut fonctionner en formant un courant pour exécuter dans les deux cas un procédé selon l'une quelconque des revendications 1 à 20.

24. Parc éolien (112, 500, 700) selon la revendication 23, **caractérisé en ce que** la première et/ou la deuxième éolienne (100, 704) sont une éolienne (100, 704) selon la revendication 22.

25. Parc éolien (112, 500, 700) selon la revendication 23 ou 24, **caractérisé en ce qu'**au moins un premier ou l'au moins un premier onduleur (812), qui peut fonctionner en formant une tension, et au moins un deuxième ou l'au moins un deuxième onduleur (822), qui peut fonctionner en formant un courant, sont couplés conjointement à une unité de stockage d'énergie, en particulier un accumulateur à batterie, et forment ensemble une unité de démarrage à froid et sont préparés pour être utilisés dans le mode d'établissement pour faire fonctionner le réseau de production d'énergie, en particulier de telle sorte que l'unité de stockage d'énergie fournit, à l'au moins un premier et à l'au moins un deuxième onduleur, l'énergie nécessaire au fonctionnement du mode d'établissement.
